(19) Europäisches Patentamt
European Patent Office
Office européen des brevets

(11) EP 2 162 273 B1

(12) # FASCICULE DE BREVET EUROPEEN

(45) Date de publication et mention de la délivrance du brevet:
**22.05.2013 Bulletin 2013/21**

(21) Numéro de dépôt: **08826132.6**

(22) Date de dépôt: **06.06.2008**

(51) Int Cl.:
***B29C 49/46*** *(2006.01)* ***B29C 49/78*** *(2006.01)*
***B65D 1/02*** *(2006.01)*

(86) Numéro de dépôt international:
**PCT/FR2008/000772**

(87) Numéro de publication internationale:
**WO 2009/007525 (15.01.2009 Gazette 2009/03)**

(54) **RÉCIPIENT EN POLYMÈRE PRÉSENTANT UN GRADIENT DE CRISTALLINITÉ**

POLYMERGEFÄSS MIT KRISTALLINITÄTSGRADIENT

POLYMER VESSEL HAVING A CRYSTALLINITY GRADIENT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **07.06.2007 FR 0704065**

(43) Date de publication de la demande:
**17.03.2010 Bulletin 2010/11**

(73) Titulaire: **Sidel Participations**
**76930 Octeville Sur Mer (FR)**

(72) Inventeurs:
- **DERRIEN, Mikaël**
**F-76930 Octeville sur Mer (FR)**
- **PROTAIS, Pierrick**
**F-76930 Octeville sur Mer (FR)**

(74) Mandataire: **Demulsant, Xavier**
**Dejade & Biset**
**35, rue de Châteaudun**
**75009 Paris (FR)**

(56) Documents cités:
**US-A- 4 818 575**
**US-A- 4 820 795**
**US-A1- 2002 048 642**
**US-A1- 2003 152 726**

- **DATABASE WPI Week 199813 Thomson Scientific, London, GB; AN 1998-139610 XP002469488 -& JP 10 016042 A (NIPPON GOSEI GOMU KK) 20 janvier 1998 (1998-01-20)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 162 273 B1

## Description

L'invention a trait à la fabrication des récipients, par soufflage ou étirage soufflage à partir d'ébauches en polymère voir par exemple US 4818575 et US 4820795.

Dans ce qui suit, le terme « ébauche » recouvre non seulement la notion de préforme, mais également celle de récipient intermédiaire, c'est-à-dire un objet ayant subi à partir d'une préforme un premier soufflage (qui peut être libre) et destiné à en subir un second pour former le récipient final.

Parmi les polymères les plus couramment utilisés pour la fabrication des récipients se trouvent les polyesters saturés, et notamment le PET (poly(-éthylène téréphtalate-)).

Rappelons brièvement que l'étirage soufflage des récipients consiste, à partir d'une ébauche en polymère ayant subi une chauffe préalable, à introduire cette ébauche dans un moule ayant la forme du récipient final à former, puis à étirer l'ébauche au moyen d'une tige d'élongation (également appelée canne) et à y insuffler un gaz (généralement de l'air) sous pression pour plaquer le matériau contre la paroi du moule.

Rappels sur le PET

Nous faisons ici quelques rappels sur la structure ainsi que sur les propriétés physiques et mécaniques du PET, afin de permettre une meilleure appréhension de ce qui suivra.

L'invention n'est certes pas limitée au cas du PET, mais, dans la mesure où ce matériau est, à l'heure actuelle, le plus couramment utilisé pour l'étirage soufflage des récipients, il paraît opportun d'étudier cet exemple avec soin.

Dans ce qui suit, les chiffres entre crochets renvoient aux documents listés dans la notice bibliographique annexée à la présente description.

Le PET est un polyester obtenu par polycondensation à partir de l'acide téréphtalique et de l'éthylène glycol. Sa structure peut être amorphe ou partiellement cristalline (sans toutefois dépasser 50%). La possibilité de passer d'une phase à l'autre dépend fortement de la température : en dessous de sa température de transition vitreuse ($T_g$ = 80°C), les chaînes macromoléculaires ne sont pas assez mobiles et le matériau est solide, avec une microstructure figée ; au-dessus de la température de fusion $T_f$ (environ 270°C), les liaisons entre les chaînes sont détruites, et le matériau est liquide. Entre ces deux températures, les chaînes sont mobiles et leur conformation peut changer (Cf. [2]).

Plus précisément, au-dessus de $T_g$ les mouvements de chaînes rendus possibles dans les zones désordonnées amorphes permettent des déformations de la matière plus importantes et plus faciles (le module d'Young, caractéristique de la rigidité, chute brutalement à partir de $T_g$) (Cf. [1]).

La formule chimique du PET (Cf. [1]) est la suivante :

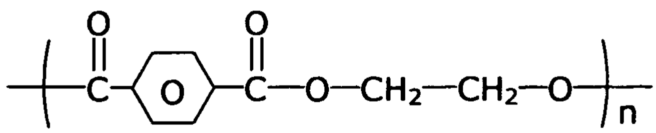

La cristallisation du polymère se produit entre la température de transition vitreuse $T_g$ et la température de fusion $T_f$. Si le polymère subit en même temps une déformation ou un écoulement, la cinétique de cristallisation est accélérée. Il est important de noter que la texture cristalline obtenue dans ce cas est complexe et anisotrope (Cf. [3]).

L'apport énergétique nécessaire pour modifier la structure des chaînes macromoléculaires peut être thermique (on parle alors de cristallisation naturelle ou statique), ou mécanique, par déformation permanente du matériau. Cet apport énergétique par déformation présente, entre autres, les avantages suivants :

- il est rapide (il amène les chaînes à s'étirer et s'orienter, facilitant ainsi leur passage d'un état désordonné amorphe à un état structuré cristallisé),
- l'orientation induite augmente la résistante mécanique du matériau,
- les cristaux formés conservent la translucidité du matériau, contrairement aux cristaux générés par cristallisation thermique (les lamelles formées restant de dimensions faibles par rapport aux longueurs d'ondes du spectre visible).

Dans cet état cristallisé et orienté, le PET présente de nombreuses qualités : de très bonnes propriétés mécaniques (haute rigidité, bonne résistance à la traction et au déchirement), de bonnes propriétés optiques et des propriétés barrières au $CO_2$. (Cf. [2])

Les propriétés mécaniques du PET sont essentiellement fonction de la texture cristalline, de la fraction volumique cristalline et des dimension et orientation moléculaires. Il est connu que ces paramètres sont affectés notamment par l'histoire thermique du matériau (Cf. [4]).

Le durcissement structural du polymère a longtemps été associé à la cristallisation exclusivement, mais des études récentes montrent que ce durcissement apparaît même sans cristallisation complète et peut être imputé à l'orientation des chaînes macromoléculaires et à leur organisation (Cf. [5]).

Ces propriétés mécaniques justifient l'emploi du PET dans l'étirage soufflage des récipients, et notamment des bouteilles. L'étirage soufflage provoque une bi-orientation du polymère, à savoir, d'une part, une orientation axiale des macromolécules lors de l'étirage au moyen de la tige d'élongation et, d'autre part, une orientation radiale des macromolécules lors du soufflage.

Plus précisément, l'étirage du PET provoque un changement de conformation de type gauche ou trans des chaînes moléculaires, ce qui entraîne une cristallisation partielle du polymère. En termes de microstructure, les noyaux benzéniques tendent à s'orienter dans un plan parallèle aux directions principales de l'étirage. Comme nous l'avons rappelé ci-dessus, le PET ne cristallise pas à 100%, le taux maximum constaté étant d'environ 50%. Les récipients fabriqués dans l'industrie, et notamment les bouteilles, présentent généralement un taux proche de 35%. (Cf. [2]).

Nous verrons ci-après que, pour certaines applications et dans certaines conditions opératoires particulières, le taux de cristallinité peut être augmenté (jusqu'à 40% et même, prétendent certains, au-delà encore (Cf. [6])).

Plusieurs méthodes connues permettent de mesurer le taux de cristallinité d'un polymère. Les deux méthodes les plus sont répandues la densimétrie et l'analyse calorimétrique différentielle (plus connue sous son acronyme anglais DSC - Differential Scanning Calorimetry). Ces méthodes sont décrites dans [2] et résumées ci-après.

La densimétrie se fonde sur la détermination de la densité du matériau : lorsque le matériau cristallise, sa densité augmente du fait de l'organisation plus compacte des chaînes dans la phase cristalline. En supposant que les volumes spécifiques des deux phases obéissent à une loi de mélange, on peut alors calculer le taux de cristallinité par la relation suivante :

$$X_c = \frac{d}{d_c}\frac{d_a - d}{d_a - d_c}$$

La densité *d* de l'échantillon est mesurée par pesées successives dans l'air et dans l'eau. La densité $d_a$ = 1,333g/$cm^3$ de la phase amorphe est une valeur relativement bien établie. La densité $d_c$ de la phase cristalline varie entre 1,423 et 1,433 g/$cm^3$ pour un PET orienté ayant subi un recuit entre 60°C et 100°C. La valeur généralement admise est de 1,455 g/$cm^3$.

L'analyse DSC consiste quant à elle à établir un thermogramme pour l'échantillon de polymère à disposition. Classiquement, on trace ce thermogramme en effectuant une chauffe du matériau à une vitesse de 10°C/min.

Un exemple de thermogramme est reproduit sur la figure 1, pour un PET industriel (PET 9921W EASTMAN), généralement utilisé pour l'étirage soufflage des bouteilles (Cf. [3]) et dont la masse moléculaire moyenne est de $M_n$ = 26*kg*/*mol.* Le passage de la température de transition vitreuse (à $T_g = 78°C$) se traduit par une inflexion de la courbe. On observe ensuite un premier pic exothermique centré autour de 135°C, caractéristique de la cristallisation d'un matériau initialement amorphe (Cf. [2]), puis un second pic, endothermique cette fois, à $T_f = 250°C$, qui correspond à la fusion des cristaux formés précédemment.

Le calcul du taux de cristallinité initial peut se faire en comparant la différence d'enthalpie (aire sous les pics) entre fusion et cristallisation, que l'on note $\Delta H$, avec l'enthalpie de fusion $H_{ref}$ d'un PET supposé parfaitement cristallin, dont la valeur est comprise généralement choisie aux environs de 100 $J.g^{-1}$. Le taux de cristallinité est donné par l'équation suivante :

$$X_C = \frac{\Delta H}{H_{ref}}$$

On notera que l'analyse DSC est souvent préférée à la densimétrie, réputée moins précise.

<u>Contexte de l'invention</u>

Ces rappels effectués, attachons-nous à présent au contexte dans lequel l'invention a été réalisée.

Comme nous l'avons vu, la cristallinité et l'orientation moléculaire du polymère ont une influence sur ses propriétés mécaniques. Les industriels ont depuis longtemps mis en application ces connaissances, afin d'accroître la rigidité des récipients, par exemple pour permettre à ceux-ci de supporter des pressions importantes, qui peuvent atteindre plusieurs bars (cas des boissons carbonatées).

De nombreux industriels ont également cherché à mettre en application les conséquences supposées de la cristallisation des matériaux sur les propriétés mécaniques des récipients fabriqués à partir de ces matériaux. En particulier, il est universellement affirmé dans la littérature scientifique et technique que l'augmentation de la cristallinité diminue le retrait du récipient lors de son remplissage à chaud, c'est-à-dire à une température supérieure à la température de transition vitreuse $T_g$. (Le retrait proviendrait de la libération des contraintes internes accumulées par le matériau lors de l'orientation de ses macromolécules au cours de l'étirage soufflage (Cf. [7]).)

L'augmentation de la cristallinité est classiquement obtenue par un procédé appelé thermofixation (en anglais *heat set*), qui consiste, à la fin du soufflage, à maintenir le récipient formé contre la paroi du moule, laquelle est chauffée à une température prédéterminée, pouvant aller jusqu'à 250°C. Le récipient est ainsi maintenu plaqué contre la paroi du moule pendant plusieurs secondes. De nombreuses préconisations existent, variables selon les industriels, tant en ce qui concerne la température que la durée de la thermofixation. [8] et [9], notamment, proposent toute une gamme de températures, comprises entre 130°C et 250°C, et de temps (6 s, 30 s et 120 s), destinées notamment à diminuer le retrait du récipient lors d'un remplissage à chaud. Les récipients ayant subi une thermofixation pour les rendre résistants à la déformation lors d'un remplissage à chaud sont, dans le langage industriel courant, dénommés HR (*heat resistant*).

propose de faire circuler dans le récipient, en fin de soufflage, un gaz (de l'air) à une température dite élevée, comprise entre 200°C et 400°C, de manière à amener la paroi interne du récipient à une température d'au moins 120°C afin d'augmenter la cristallinité de celui-ci. Il est prétendu dans ce document que la durée totale de fabrication du récipient peut être inférieure à 6 s, tandis que les taux de cristallinité obtenus varient de 34,4% à 46,7%. (On notera qu'il s'agit de taux moyens de cristallinité du récipient, mesurés par une méthode densimétrique voisine de celle présentée ci-dessus.) Selon [6], un taux de cristallinité supérieur à 30% doit être considéré comme caractéristique d'une cristallinité élevée.

Il a également été proposé (Cf. [10]) de procéder au soufflage du récipient en deux étapes : une première au cours de laquelle est formé un récipient intermédiaire de plus grand volume que le récipient à obtenir, puis une seconde au cours de laquelle le récipient est moulé à ses dimensions définitives. Entre ces deux étapes, le récipient intermédiaire est chauffé à une température comprise entre 180°C et 220°C pendant une durée comprise entre 1 min et 15 min. Selon [10], la variation de volume du récipient lors de son remplissage à chaud (i.e. à une température de 93°C à 95°C) est, dans ces conditions, inférieure à 5%. Une explication proposée est que les deux opérations successives de moulage procurent deux biorientations cristallines, au lieu d'une seule dans les procédés classiques.

Il a en outre été proposé (Cf. [11]) de produire des récipients ayant du côté intérieur une cristallinité supérieure à la cristallinité du côté extérieur, afin de minimiser la dispersion des arômes du liquide.

Une analyse des techniques industrielles existantes, et notamment celles qui viennent d'être brièvement rappelées, montre qu'une préoccupation primordiale, dans les solutions proposées, est la recherche d'une cristallinité maximale pour le récipient final, de sorte à diminuer autant que possible le retrait de celui-ci lors de son remplissage à chaud. Les industriels se heurtent toutefois à un problème récurrent : la contradiction entre taux de cristallinité (que l'on souhaite maximal, comme nous venons de le voir) et temps de cycle (que l'on souhaite minimal). Il est en effet couramment admis que la cristallisation du polymère est d'autant plus facile que sa vitesse de déformation est faible (Cf. notamment [1]). Les temps de cycle présentés dans les documents cités sont relativement longs (supérieurs à 5 s, certains dépassant la minute) et nécessitent, pour satisfaire les exigences actuelles en termes de cadences (jusqu'à 50 000 récipients par heure), la multiplication des machines, ce qui grève les coûts de production.

## Présentation de l'invention

L'invention vise à proposer un récipient présentant des performances améliorées lors d'un remplissage à chaud.

A cet effet, l'invention propose un récipient selon la revendication 1.

Suivant un mode de réalisation, le taux de cristallinité du côté de la paroi interne est inférieur ou égal à 25%.

Quant au taux de cristallinité du côté de la paroi externe, il est de préférence supérieur ou égal à 30%.

Le taux de cristallinité du côté de la paroi interne est de préférence inférieur de 20% à 50% environ au taux de cristallinité du côté de la paroi externe.

Suivant un mode de réalisation, la paroi interne présente une épaisseur inférieure à 100 $\mu$m environ, et par exemple inférieure à 50 $\mu$m environ.

Le récipient est thermofixé ; par ailleurs, la paroi interne présente, sur une courbe DSC, un pic exothermique entre la température de transition vitreuse et un pic de fusion.

D'autres objets et avantages de l'invention apparaîtront à la lumière de la description faite ci-après en référence aux dessins annexés dans lesquels :

- la figure 1 est un thermogramme d'analyse calorimétrique différentielle (DSC) illustrant les variations de capacité thermique d'un PET initialement amorphe ;
- la figure 2 est une vue schématique d'élévation en coupe montrant une machine de fabrication de récipients par

étirage soufflage ;

- les figures 3A à 3F sont des vues schématiques d'élévation en coupe montrant différentes étapes successives d'un procédé de fabrication par étirage soufflage de récipients, selon un premier exemple de réalisation ;
- la figure 4A est un graphique illustrant l'évolution au cours du temps de la pression régnant dans le récipient lors de son étirage soufflage conformément au procédé illustré sur les figures 3A à 3F ;
- la figure 4B est un chronogramme illustrant les ouvertures et fermetures des électrovannes ainsi que l'opération d'allumage au sein de la machine illustrée sur la figure 2, pour la mise en oeuvre du procédé illustré sur les figures 3A à 3F et sur la figure 4A ;
- les figures 5A à 5H sont des vues schématiques d'élévation en coupe montrant différentes étapes successives d'un procédé de fabrication par étirage soufflage de récipients, selon un deuxième exemple de réalisation ;
- la figure 6A est un graphique illustrant l'évolution au cours du temps de la pression régnant dans le récipient lors de son étirage soufflage conformément au procédé illustré sur les figures 5A à 5H ;
- la figure 6B est un chronogramme illustrant les ouvertures et fermetures des électrovannes ainsi que l'opération d'allumage au sein de la machine illustrée sur la figure 2, pour la mise en oeuvre du procédé illustré sur les figures 5A à 5H et sur la figure 6A ;
- les figures 7A à 7L sont des vues schématiques d'élévation en coupe montrant différentes étapes successives d'un procédé de fabrication par étirage soufflage de récipients, selon un troisième exemple de réalisation ;
- la figure 8A est un graphique illustrant l'évolution au cours du temps de la pression régnant dans le récipient lors de son étirage soufflage conformément au procédé illustré sur les figures 7A à 7L ;
- la figure 8B est un chronogramme illustrant les ouvertures et fermetures des électrovannes ainsi que les opérations d'allumage au sein de la machine illustrée sur la figure 2, pour la mise en oeuvre du procédé illustré sur les figures 7A à 7L et sur la figure 8A ;
- les figures 9A à 9K sont des vues schématiques d'élévation en coupe montrant différentes étapes successives d'un procédé de fabrication par étirage soufflage de récipients, selon un quatrième exemple de réalisation ;
- la figure 10A est un graphique illustrant l'évolution au cours du temps de la pression régnant dans le récipient lors de son étirage soufflage conformément au procédé illustré sur les figures 9A à 9K ;
- la figure 10B est un chronogramme illustrant les ouvertures et fermetures des électrovannes ainsi que l'opération d'allumage au sein de la machine illustrée sur la figure 2, pour la mise en oeuvre du procédé illustré sur les figures 9A à 9K et sur la figure 10A ;
- les figures 11A à 11F sont des vues schématiques d'élévation en coupe montrant différentes étapes successives d'un procédé de fabrication par étirage soufflage de récipients, selon un cinquième exemple, comparatif, de réalisation ;
- la figure 12A est un graphique illustrant l'évolution au cours du temps de la pression régnant dans le récipient lors de son étirage soufflage conformément au procédé illustré sur les figures 11A à 11F ;
- la figure 12B est un chronogramme illustrant les ouvertures et fermetures d'électrovannes d'une machine mettant en oeuvre le procédé illustré sur la figure 12A ;
- la figure 13 est une vue d'élévation en plan montrant un exemple typique de récipient obtenu par un procédé de fabrication selon l'un quelconque des exemples illustrés sur les figures précédentes ;
- la figure 14 est une vue en coupe à échelle élargie d'un détail du corps du récipient de la figure 13, pris dans l'encart XIV ;
- la figure 15 est un thermogramme d'analyse calorimétrique différentielle (DSC) illustrant les variations de la capacité thermique massique d'un récipient fabriqué conformément à un procédé de fabrication selon l'un des exemples illustrés dans les figures précédentes, pour cinq tranches successives de la paroi du récipient ; et
- la figure 16 est un thermogramme similaire à celui de la figure 14, pour un récipient fabriqué conformément à un procédé de fabrication selon un autre des exemples illustrés dans les figures précédentes.

Sur la figure 2 est partiellement illustrée une machine **1** pour la fabrication par étirage soufflage de récipients **2** à partir d'ébauches **3** en polymère. Dans ce qui suit, les ébauches **3** sont des préformes : on emploiera ce terme par souci de cohérence.

La machine **1** comprend, montées sur un carrousel (non représenté) une pluralité d'unités **4** de moulage comprenant chacune un moule **5** (tel qu'illustré sur la figure 2). Ce moule **5,** réalisé en acier ou en alliage d'aluminium, comprend deux demi-moulés **6** et un fond de moule **7** qui définissent ensemble une cavité **8** interne, destinée à recevoir une préforme **3** préalablement chauffée à une température supérieure à la température de transition vitreuse (Tg) de la matière constitutive de la préforme **3,** et dont la forme correspond à la forme finale souhaitée du récipient **2** fabriqué à partir de cette préforme **3.** Quelle que soit sa forme, le récipient **2** (tel qu'illustré sur la figure 13) comprend généralement un col **9,** un corps **10** et un fond **11.**

L'unité **4** de moulage comprend :

- une tige **12** d'élongation munie de trous **13** et montée coulissante par rapport au moule **5** le long d'un axe **14** principal (généralement de révolution) de celui-ci, entre une position haute permettant l'introduction de la préforme **3** et une position basse où, à la fin de l'étirage de la préforme **3,** la tige **12** atteint le fond de moule **7** en y plaquant le fond **11**,
- un boîtier **15** définissant une tuyère **16** dans laquelle coulisse la tige **12** et qui, lors de la fabrication du récipient **2,** coopère avec un col **17** de la préforme **3** (confondu avec le col **9** du récipient et ne subissant pas de déformation au cours de la fabrication),
- plusieurs circuits fluidiques débouchant dans la tuyère **16** via le boîtier **15**, à savoir :
- un circuit **18** d'air de présoufflage à moyenne pression (comprise entre 5 et 20 bar), ce circuit **18** comprenant une source **19** d'air de présoufflage (par exemple une première canalisation d'air comprimé alimentant plusieurs machines) et un conduit **20** (qui peut être formé au moins partiellement dans le boîtier **15**) reliant cette source **19** à la tuyère **16** avec interposition d'une première électrovanne **EV1**,
- un circuit **22** de gaz réactif (des exemples de gaz seront donnés ci-après) comprenant une source **23** de gaz réactif et un conduit **24** (qui peut être formé au moins partiellement dans le boîtier **15**) reliant cette source **23** à la tuyère **16** avec interposition d'une deuxième électrovanne **EV2**,
- un circuit **26** d'air de soufflage à haute pression (comprise entre 30 et 40 bar), comprenant une source **27** d'air de soufflage (par exemple une seconde canalisation d'air comprimé alimentant plusieurs machines) et un conduit **28** (qui peut être formé au moins partiellement dans le boîtier **15**) reliant cette source **27** à la tige **12** avec interposition d'une troisième électrovanne **EV3**,
- un circuit **30** de dégazage comprenant une bouche **31** de mise à l'air libre (éventuellement doublée d'une pompe) et un conduit **32** reliant la tuyère à cette bouche avec interposition d'une quatrième électrovanne **EV4.**

On peut utiliser comme gaz réactifs de l'hydrogène ($H_2$), du méthane ($CH_4$), du propane ($C_3H_8$) ou encore de l'acétylène ($C_2H_2$).
L'hydrogène est préféré en raison du caractère non polluant de sa réaction d'oxydation ($2H_2+O_2 \rightarrow 2H_2O$), dont le produit est de l'eau pure. L'hydrogène peut être soit produit à la demande, directement en amont de la machine **1** (par exemple par électrolyse de l'eau), soit stocké dans des conteneurs d'où il est prélevé pour les besoins du procédé.
Les conduits **20**, **24**, **28**, **32** peuvent être formés au moins partiellement dans le boîtier **15**, comme cela est illustré sur la figure 2. Quant aux électrovannes **EV1**, **EV2**, **EV3**, **EV4**, elles sont raccordées électriquement à une unité de contrôle **34** qui en commande l'ouverture et la fermeture (en tenant dûment compte des temps de réponse des électrovannes). Ces électrovannes **EV1**, **EV2**, **EV3**, **EV4** peuvent être disposées à distance du boîtier **15** ou, pour plus de compacité, intégrées à celui-ci. Pour la réalisation d'un tel boîtier **15**, l'homme du métier pourra se référer à la demande de brevet FR 2 872 082 (Sidel) ou à la demande internationale équivalente WO 2006/008380.
L'état des électrovannes **EV1**, **EV2**, **EV3**, **EV4** (fermé/ouvert) et de la bougie **36** (éteint/allumé) est illustré sur les chronogrammes des figures 4B, 6B, 8B, 10B, 12B, qui comprennent chacun cinq lignes, numérotées de 1 à 5 et représentant respectivement :

- ligne 1, l'état (0 : fermé / 1 : ouvert) de la première électrovanne (alimentation en air de présoufflage),
- ligne 2, l'état (0: fermé / 1 : ouvert) de la deuxième électrovanne (alimentation en gaz réactif),
- ligne 3, l'état (0 : éteint / 1 : allumé) de la bougie,
- ligne 4, l'état (0: fermé / 1 : ouvert) de la troisième électrovanne (alimentation en air de soufflage),
- ligne 5: l'état (0: fermé / 1 : ouvert) de la quatrième électrovanne (dégazage).

Comme cela est visible sur la figure 2, l'unité **4** de moulage est par ailleurs équipée d'un dispositif **35** d'allumage propre, à un instant donné prédéterminé et sous la commande de l'unité **34** de contrôle, à produire au sein de la tuyère **16** (ou du récipient **2**) une étincelle pour enflammer le mélange d'air et de gaz réactif présent dans le récipient **2.**
Suivant un mode de réalisation, ce dispositif **35** d'allumage comprend une bougie **36** ayant une électrode **37** centrale et une électrode **38** de masse débouchant toutes deux au sein de la tuyère **16** (qui communique avec l'intérieur du récipient **2**) **-** ou, en variante, dans la tige **12 -** et entre lesquelles peut être produit, sous la commande de l'unité de contrôle **34,** un arc électrique provoquant l'inflammation du mélange.
Comme cela est illustré sur la figure 2, l'unité **4** de moulage est en outre équipée d'un circuit **39** de chauffe du moule **5**, qui comprend une source **40** de fluide caloporteur sous pression (par exemple de l'eau ou de l'huile) et des conduits **41** ménagés dans le l'épaisseur du moule **5** (demi-moules **6** et fond **7** compris), dans lequel le fluide caloporteur en provenance de la source **40** circule pour maintenir le moule **5** à une température supérieure à la température ambiante (20°C). En pratique, la température du moule est régulée à une valeur moyenne comprise entre 20°C et 160°C (mesurée sur la paroi interne du moule **5**), selon les applications - des exemples de températures seront fournis ci-après.
On décrira ci-après cinq exemples particuliers de procédés de fabrication de récipients **2** du type HR (résistants à la chaleur), ayant par exemple une forme telle qu'illustrée sur la figure 13, au moyen de la machine **1** qui vient d'être décrite.

Pour chaque exemple décrit, on mesure par la DSC la cristallinité d'un récipient **2** obtenu par le procédé correspondant. Plus précisément, on mesure la cristallinité du corps **10** du récipient **2,** au moins du côté d'une paroi **42** interne et d'une paroi **43** externe opposées. A cet effet, un échantillon est prélevé dans le corps **10** et découpé dans son épaisseur en plusieurs tranches (par exemple par coupe microtomique) dont on mesure la cristallinité respective. Suivant un mode de réalisation, l'échantillon est découpé en cinq tranches d'épaisseur sensiblement égale. Par exemple, pour un récipient **2** dont l'épaisseur est de 360 $\mu$m environ, chaque tranche découpée présente une épaisseur de 50 $\mu$m (la lame de coupe formant, à chaque passe entre deux tranches successives, des copeaux sur une épaisseur de 25 $\mu$m environ). On note A, B, C, D et E les cinq tranches de matière successives, en partant de l'intérieur du récipient **2.**

Rappelons que l'analyse DSC permet de quantifier les phénomènes thermiques (endo ou exothermiques) accompagnant les transformations (cristallisation, fusion) d'un matériau.

Le mode opératoire employé ici est le suivant.

On utilise un microcalorimètre différentiel à compensation de puissance. Un tel microcalorimètre comprend deux fours sous atmosphère neutre (généralement dans de l'azote). Dans le premier, on placé une référence (généralement une coupelle vide). Dans le second, on place l'échantillon sur lequel porteront les mesures DSC.

Chaque four est équipé de deux résistances de platine, dont l'une sert au chauffage et l'autre à la mesure de la température.

On mesure les flux de chaleur échangés, d'une part entre la référence et le milieu extérieur, d'autre part entre l'échantillon et le milieu extérieur au cours d'un accroissement de la température à vitesse de chauffe constante depuis la température ambiante (20°C environ) jusqu'à une température supérieure à la température de fusion connue du matériau étudié (en l'occurrence, pour le PET on chauffe jusqu'à 300°C environ, le matériau étant supposé fondre aux environs de 250°C).

On en déduit la capacité thermique massique de l'échantillon étudié par comparaison avec la référence, par la relation suivante :

$$C_p = \frac{1}{m}\frac{dQ}{dT}$$

Où :

m est la masse de l'échantillon en grammes,
T la température,
Q la quantité de chaleur en $J.g^{-1}.K^{-1}$ nécessaire pour provoquer dans l'échantillon une augmentation de température de la valeur *dT.*

Si l'on introduit la vitesse de chauffe *q,* gardée constante lors de la mesure (et en l'occurrence choisie égale à 10 $K^{-1}$), définie par la relation $q = \frac{dQ}{dt}$, alors la capacité thermique massique peut s'écrire de la manière suivante :

$$C_p = \frac{1}{m \cdot q}\frac{dQ}{dt}$$

Les variations de la capacité thermique massique de l'échantillon en fonction de la température, sont tracées à partir des mesures de flux de chaleur effectuées dans le microcalorimètre. La courbe de ces variations est appelée thermogramme. Un tel thermogramme est représenté sur la figure 1 pour un échantillon du PET industriel EASTMANN mentionné en introduction.

Un tel thermogramme permet de distinguer les phénomènes exothermiques (orientés vers le bas) des phénomènes endothermiques (orientés vers le haut).

Pour tout échantillon de PET initialement amorphe, tel que l'échantillon mentionné ci-dessus, on relève deux pics : un premier pic exothermique (en l'occurrence aux alentours de 135°C), correspondant à la cristallisation du matériau, et un pic endothermique (en l'occurrence aux alentours de 250°C) correspondant à la fusion du matériau.

A partir du thermogramme, on peut calculer le taux de cristallinité du matériau initial, à partir de la différence $\Delta H$ des enthalpies échangées au cours des phénomènes de fusion d'une part, et de cristallisation d'autre part.

L'enthalpie de fusion $\Delta H_f$ est définie par l'aire sous le pic de fusion :

$$\Delta H_f = \int_{pic\ fusion} C_p(T)dT$$

L'enthalpie de cristallisation $\Delta H_c$ est quant à elle définie par l'aire sous le pic de cristallisation :

$$\Delta H_c = - \int_{pic\ cristallisation} C_p(T)dT$$

On en déduit la différence des enthalpie de fusion et de cristallisation : $\Delta H = \Delta H_f - \Delta H_c$, puis le taux de cristallinité à partir de la relation suivante :

$$X_C = \frac{\Delta H}{H_{ref}}$$

Où $H_{ref}$ est l'enthalpie de fusion d'un échantillon supposé totalement cristallin. On choisit ici une valeur de 140 $J.g^{-1}$, qui correspond à la valeur la plus usitée dans les laboratoires de matériaux plastiques.

<u>Exemple 1 (figures 3A à 3F, 4A et 4B)</u>

Dans cet exemple, le moule **5** est chauffé de sorte à présenter du côté de sa paroi interne une température de 160°C environ. Le matériau de la préforme **3** est un PET. Le gaz réactif est de l'hydrogène ($H_2$). Le mélange gazeux air/hydrogène est effectué en respectant une proportion d'hydrogène en volume comprise entre 4% et 18%, de préférence de 6%.

Après introduction de la préforme **3** chaude dans le moule **5,** le procédé comprend une première opération, dite de présoufflage, consistant à étirer la préforme **3** par coulissement de la tige **12,** et simultanément à la présouffler en ouvrant les électrovannes **EV1** et **EV2** pour introduire dans la préforme 3 un mélange d'air et de gaz réactif à une pression comprise entre 5 et 20 bar environ (figures 3A à 3C, lignes 1 et 2 sur la figure 4B). Cette première opération, d'une durée $\alpha 1$ prédéterminée (inférieure à 250 ms) se termine par la fermeture des électrovannes **EV1** et **EV2** après que la tige **12** a terminé sa course en ayant atteint le fond de moule **7,** et que le seuil d'écoulement plastique du matériau est dépassé (ce qui se matérialise sur la courbe de pression par un premier pic de pression, aux environs de 8 à 10 bar).

Une seconde opération, dite d'allumage, consiste à enflammer le mélange gazeux par allumage de la bougie **36** (figure 3D, ligne 3 sur la figure 4B). Compte tenu de la proportion d'hydrogène dans le mélange gazeux, il se produit dans le récipient **2** en cours de formation une déflagration accompagnée d'une augmentation brusque de la température (qui atteint plusieurs centaines de degrés Celsius) et de la pression (qui dépasse 40 bar - sur la courbe de la figure 4A le pic de pression correspondant est écrêté pour des raisons d'échelle). La durée $\alpha 2$ de l'inflammation du mélange est extrêmement brève (moins de 25 ms) mais l'augmentation de la pression qui l'accompagne suffit à plaquer la matière contre la paroi du moule et ainsi former le récipient **2.**

Une troisième opération, dite de stabilisation, consiste à maintenir dans le récipient **2** ainsi formé le gaz résiduel (essentiellement un mélange d'air et de vapeur d'eau issue de la combustion de l'hydrogène, avec d'éventuelles traces de $NO_x$), pendant une durée $\alpha 3$ prédéterminée (comprise entre 1000 et 1500 ms) en gardant fermées toutes les électrovannes **EV1**, **EV2**, **EV3**, **EV4** de manière à permettre la diminution de la température et de la pression dans le récipient **2** (figure 3E).

Une quatrième opération, dite de dégazage, consiste à dégazer le récipient **2** en fermant la troisième électrovanne **EV3** (figure 4B, ligne 4) et en laissant ouverte la quatrième électrovanne **EV4** pendant une durée $\alpha 4$ prédéterminée (comprise entre 100 et 500 ms), pour laisser s'échapper l'air (figure 3F) jusqu'à ce que la pression régnant à l'intérieur du récipient **2** ait à peu près atteint la pression atmosphérique (figure 4B, ligne 5). A l'issue de cette opération, la quatrième électrovanne **EV4** est fermée, le moule **5** ouvert et le récipient **2** évacué pour permettre la répétition du cycle avec une nouvelle préforme **3.**

On a mesuré par la DSC, dans les conditions décrites ci-dessus, la cristallinité d'un récipient **2** obtenu par ce procédé, du côté de la paroi interne **42** du corps **10** (tranche A) et du côté de sa paroi externe **43** (tranche E). Les résultats des mesures sont présentés dans le tableau ci-après :

| Tranche | Cristallinité (%) |
|---|---|
| A (paroi interne) | 22 |
| E (paroi externe) | 32 |

On constate que le récipient **2** présente un gradient négatif de cristallinité au niveau de sa paroi interne **42.** La cristallinité mesurée du côté de la paroi interne **42** est en l'occurrence très inférieure (de 30% environ) à la cristallinité mesurée du côté de la paroi externe **43.**

On constate par ailleurs que la résistance mécanique à la déformation d'un tel récipient 2, lors d'un remplissage à chaud (avec un liquide dont la température est comprise entre 85°C et 95°C), est supérieure à celle d'un récipient obtenu par un procédé sans allumage (Cf. l'exemple comparatif). De fait, pour une température de liquide comprise entre 85°C et 95°C, le taux de rétractation du récipient est inférieur ou égal à 1%.

On peut expliquer ce phénomène de la manière suivante. Les conditions extrêmes de température (qui atteint plusieurs centaines de degrés Celsius) et de pression régnant à l'intérieur du récipient **2** en cours de formation lors de la déflagration induite par l'allumage du mélange gazeux explosif provoquent la fusion du matériau au moins du côté de la paroi interne **42** du récipient **2.**

Après la déflagration, le récipient **2** formé subit, du côté de sa paroi externe 43 en contact avec la paroi chauffée du moule **5**, une thermofixation. Il bénéficie ainsi, sur une certaine épaisseur à partir de sa paroi externe **43**, d'un apport de cristallinité par voie thermique cependant que sa paroi interne **42**, devenue complètement (ou presque) amorphe suite à sa fusion, conserve une forte proportion de matière amorphe, avec un taux de cristallinité comparativement plus faible.

Malgré le faible taux de cristallinité du côté de la paroi interne **42**, le taux de cristallinité élevé du côté de la paroi externe **43** confère au récipient **2** une rigidité équivalente à celle d'un récipient à cristallinité constante (tel qu'un récipient simplement thermofixé, obtenu par le procédé décrit dans l'exemple comparatif, c'est-à-dire sans allumage d'un mélange gazeux explosif), la portion de matière à cristallinité élevée (comprenant la paroi externe **43**) agissant à la manière d'une armature vis-à-vis de la portion de matière à faible cristallinité (comprenant la paroi interne **42**).

L'épaisseur de la paroi interne **42** correspond dans cet exemple à l'épaisseur de la tranche A telle que découpée pour les besoins de l'analyse DSC (cf. ci-dessus). Les mesures ont montré que le gradient de cristallinité ne s'étendait pas au-delà de la tranche C. Par conséquent, la paroi interne **42** affectée par le gradient négatif de cristallinité présente une épaisseur inférieure à 100 $\mu$m, et plus vraisemblablement inférieure à 50 $\mu$m environ.

Lors du remplissage à chaud, les contraintes résiduelles emmagasinées par le récipient **2** lors de sa formation sont relâchées en majeure partie dans la matière amorphe présente en forte proportion du côté de la paroi interne **42**, laquelle agit ainsi à la manière d'un tampon vis-à-vis de la portion de matière à cristallinité élevée en évitant la propagation de déformations dans le récipient.

<u>Exemple 2 (figures 5A à 5H, 6A, 6B)</u>

Dans cet exemple, le moule **5** est chauffé de sorte à présenter du côté de sa paroi interne une température de 160°C environ. Le matériau de la préforme **3** est un PET. Le gaz réactif est de l'hydrogène ($H_2$). Le mélange gazeux air/hydrogène est effectué en respectant une proportion d'hydrogène en volume comprise entre 4% et 18%, de préférence de 6%.

Après introduction de la préforme **3** chaude dans le moule **5**, une première opération de présoufflage consiste à étirer la préforme **3** par coulissement de la tige **12**, et simultanément à la présouffler en ouvrant les électrovannes **EV1** et **EV2** pour introduire dans la préforme **3** un mélange d'air et de gaz réactif à une pression comprise entre 5 et 20 bar environ (figures 5A à 5C, lignes 1 et 2 sur la figure 6B). Cette première opération, d'une durée $\beta$1 prédéterminée (inférieure à 250 ms) se termine par la fermeture des électrovannes **EV1** et **EV2** après que la tige **12** a terminé sa course en ayant atteint le fond de moule **7**, et que le seuil d'écoulement plastique du matériau est dépassé (ce qui se matérialise sur la courbe de pression par un premier pic de pression, aux environs de 8 à 10 bar).

Une seconde opération, dite d'allumage, consiste à enflammer le mélange gazeux par allumage de la bougie **36** (figure 5D, ligne 3 sur la figure 6B). Compte tenu de la proportion d'hydrogène dans le mélange, il se produit dans le récipient **2** en formation une déflagration accompagnée d'une augmentation brusque de la température (qui atteint plusieurs centaines de degrés Celsius) et de la pression (qui dépasse **40** bar - sur la courbe de la figure 6A le pic de pression correspondant est écrêté pour des raisons d'échelle). La durée $\beta$2 de l'inflammation du mélange est extrêmement brève (moins de 25 ms) mais l'augmentation de la pression qui l'accompagne suffit à plaquer la matière contre la paroi du moule **5** et ainsi former le récipient **2**.

Une troisième opération, dite de stabilisation, consiste à maintenir dans le récipient **2** le gaz résiduel (essentiellement un mélange d'air et de vapeur d'eau issue de la combustion de l'hydrogène, avec d'éventuelles traces de

$NO_x$), pendant une durée β3 prédéterminée (comprise entre 200 et 300 ms) en gardant fermées toutes les électrovannes **EV1**, **EV2**, **EV3**, **EV4** de manière à permettre la diminution de la température et de la pression dans le récipient **2** (figure 5E).

Une quatrième opération, dite de soufflage, consiste à ouvrir la troisième électrovanne **EV3** pour introduire dans le récipient **2,** via les trous **13** ménagés dans tige **12**, de l'air à haute pression (comprise entre 30 et 40 bar environ) à température ambiante et ainsi maintenir plaqué contre la paroi du moule **5** le récipient **2** formé lors de l'opération d'allumage (figure 5F, ligne 4 sur la figure 6B). Pendant cette opération de soufflage, d'une durée β4 prédéterminée (de préférence inférieure à 1000 ms), la quatrième électrovanne **EV4** est maintenue fermée.

Une cinquième opération, dite de balayage, consiste à effectuer un balayage à l'air du récipient **2,** en maintenant ouverte la troisième électrovanne **EV3** pour continuer à introduire dans le récipient **2** l'air à haute pression (figure 6B, ligne 4) à température ambiante, tout en ouvrant simultanément la quatrième électrovanne **EV4** pour permettre à l'air sous pression d'être évacué (figure 6B, ligne 5). On génère ainsi une circulation d'air dans le récipient **2** tout en le maintenant sous pression (entre 10 et 15 bar), ce qui continue de le plaquer contre la paroi du moule **5** tout en le refroidissant (au moins du côté de sa paroi interne **42**) afin qu'il conserve au sortir du moule **5** la forme que celui-ci lui a conférée (figure 5G). Cette opération de balayage est réalisée pendant une durée β5 prédéterminée, comprise entre 200 et 2000 ms.

Une sixième opération, dite de dégazage, consiste à dégazer le récipient **2** en fermant la troisième électrovanne **EV3** (figure 6B, ligne 4) et en laissant ouverte la quatrième électrovanne **EV4** pendant une durée β6 prédéterminée (comprise entre 100 et 500 ms), pour laisser s'échapper l'air (figure 5H) jusqu'à ce que la pression régnant à l'intérieur du récipient **2** ait à peu près atteint la pression atmosphérique (figure 6B, ligne 5). A l'issue de cette opération, la quatrième électrovanne EV4 est fermée, le moule **5** ouvert et le récipient **2** évacué pour permettre la répétition du cycle avec une nouvelle préforme.

On a mesuré par la DSC, dans les conditions décrites ci-dessus, la cristallinité d'un récipient **2** obtenu par ce procédé, du côté de la paroi interne **42** du corps **10** (tranche A) et du côté de sa paroi externe **43** (tranche E). Les résultats des mesures sont présentés dans le tableau ci-après :

| Tranche | Cristallinité (%) |
|---|---|
| A (paroi interne) | 22 |
| E (paroi externe) | 32 |

On constate que le récipient **2** présente un gradient négatif de cristallinité au niveau de sa paroi interne **42**. La cristallinité mesurée du côté de la paroi interne **42** est en l'occurrence très inférieure (de 30% environ) à la cristallinité mesurée du côté de la paroi externe **43**.

On constate par ailleurs que la résistance mécanique à la déformation d'un tel récipient 2, lors d'un remplissage à chaud (avec un liquide dont la température est comprise entre 85°C et 95°C), est supérieure à celle d'un récipient obtenu par un procédé sans allumage (Cf. l'exemple comparatif). De fait, pour une température de liquide comprise entre 85°C et 95°C, le taux de rétractation du récipient est inférieur ou égal à 1%.

On peut expliquer ce phénomène de la manière suivante. Les conditions extrêmes de température (qui atteint plusieurs centaines de degrés Celsius) et de pression régnant à l'intérieur du récipient **2** en cours de formation lors de la déflagration induite par l'allumage du mélange gazeux explosif provoquent la fusion du matériau au moins du côté de la paroi interne **42** du récipient **2**.

Après la déflagration, le récipient **2** formé subit, du côté de sa paroi externe **43** en contact avec la paroi chauffée du moule **5**, une thermofixation. Il bénéficie ainsi, sur une certaine épaisseur à partir de sa paroi externe **43**, d'un apport de cristallinité par voie thermique cependant que sa paroi interne **42**, devenue complètement (ou presque) amorphe suite à sa fusion, conserve une forte proportion de matière amorphe, avec un taux de cristallinité comparativement plus faible.

Malgré le faible taux de cristallinité du côté de la paroi interne **42**, le taux de cristallinité élevé du côté de la paroi externe **43** confère au récipient **2** une rigidité équivalente à celle d'un récipient à cristallinité constante (tel qu'un récipient simplement thermofixé, obtenu par le procédé décrit dans l'exemple comparatif, c'est-à-dire sans allumage d'un mélange gazeux explosif), la portion de matière à cristallinité élevée (comprenant la paroi externe **43**) agissant à la manière d'une armature vis-à-vis de la portion de matière à faible cristallinité (comprenant la paroi interne **42**).

L'épaisseur de la paroi interne **42** correspond dans cet exemple à l'épaisseur de la tranche A telle que découpée pour les besoins de l'analyse DSC (cf. ci-dessus). Les mesures ont montré que le gradient de cristallinité ne s'étendait pas au-delà de la tranche C. Par conséquent, la paroi interne **42** affectée par le gradient négatif de cristallinité présente une épaisseur inférieure à 100 μm, et plus vraisemblablement inférieure à 50 μm environ.

Lors du remplissage à chaud, les contraintes résiduelles emmagasinées par le récipient **2** lors de sa formation

sont relâchées en majeure partie dans la matière amorphe présente en forte proportion du côté de la paroi interne **42**, laquelle agit ainsi à la manière d'un tampon vis-à-vis de la portion de matière à cristallinité élevée en évitant la propagation de déformations dans le récipient.

Exemple 3 (figures 7A **à** 7L, 8A, 8B)

Dans cet exemple, le moule 5 est chauffé de sorte à présenter du côté de sa paroi interne une température de 130°C environ. Le matériau de la préforme **3** est un PET. Le gaz réactif est de l'hydrogène ($H_2$). Le mélange gazeux air/hydrogène est effectué en respectant une proportion d'hydrogène en volume comprise entre 4% et 18%, de préférence de 6%.

Après introduction de la préforme **3** chaude dans le moule **5**, une première opération, dite de présoufflage primaire, consiste à étirer la préforme **3** par coulissement de la tige **12**, et simultanément à la présouffler en ouvrant les électrovannes **EV1** et **EV2** pour introduire dans la préforme **3** un mélange d'air et de gaz réactif à une pression comprise entre 5 et 20 bar environ (figures 7A à 7C, lignes 1 et 2 sur la figure 8B). Cette première opération, d'une durée $\gamma$1 prédéterminée (inférieure à 250 ms) se termine par la fermeture des électrovannes **EV1** et **EV2** après que la tige **12** a terminé sa course en ayant atteint le fond de moule **7**, et que le seuil d'écoulement plastique du matériau est dépassé (qui se matérialise sur la courbe de pression par un premier pic de pression, aux environs de 8 à 10 bar).

Une seconde opération, dite d'allumage primaire, consiste à enflammer le mélange gazeux par allumage de la bougie **36** (figure 7D, ligne 3 sur la figure 8B). Compte tenu de la proportion d'hydrogène dans le mélange, il se produit dans le récipient **2** en formation une déflagration accompagnée d'une augmentation brusque de la température (qui atteint plusieurs centaines de degrés Celsius) et de la pression (qui dépasse 40 bar - sur la courbe de la figure 7A le pic de pression correspondant est écrêté pour des raisons d'échelle). La durée $\gamma$2 de l'inflammation du mélange est extrêmement brève (moins de 25 ms) mais l'augmentation de la pression qui l'accompagne suffit à plaquer la matière contre la paroi du moule **5** et ainsi former le récipient **2.**

Une troisième opération, dite de stabilisation primaire, consiste à maintenir dans le récipient **2** le gaz résiduel (essentiellement un mélange d'air et de vapeur d'eau issue de la combustion de l'hydrogène, avec d'éventuelles traces de $NO_x$), pendant une durée $\gamma$3 prédéterminée (comprise entre 200 et 300 ms) en gardant fermées toutes les électrovannes **EV1**, **EV2**, **EV3**, **EV4** de manière à permettre la diminution de la température et de la pression dans le récipient 2 (figure 8E).

Une quatrième opération, dite de dégazage primaire, consiste à dégazer le récipient **2** en ouvrant la quatrième électrovanne **EV4** pendant une durée $\gamma$4 prédéterminée (comprise entre 100 et 200 ms), pour laisser s'échapper l'air (figure 7F) jusqu'à ce que la pression régnant à l'intérieur du récipient **2** ait à peu près atteint la pression atmosphérique (figure 8B, ligne 5).

Une cinquième opération, dite de présoufflage secondaire, consiste à ouvrir à nouveau les électrovannes **EV1** et **EV2** pour introduire dans le récipient un mélange d'air et de gaz réactif à une pression comprise entre 5 et 20 bar environ (figures 7G, lignes 1 et 2 sur la figure 8B). Cette cinquième opération, d'une durée $\gamma$5 prédéterminée (inférieure à 250 ms) se termine par la fermeture des électrovannes **EV1** et **EV2** après que la pression dans le récipient **2** a atteint une valeur comprise entre 5 et 20 bar.

Une sixième opération, dite d'allumage secondaire, consiste à enflammer le mélange gazeux par allumage de la bougie **36** (figure 7H, ligne 3 sur la figure 8B). Compte tenu de la proportion d'hydrogène dans le mélange, il se produit de nouveau dans le récipient **2** une déflagration accompagnée d'une augmentation brusque de la température (qui atteint de nouveau plusieurs centaines de degrés Celsius) et de la pression (qui dépasse de nouveau 40 bar, le pic correspondant de pression étant également écrêté sur la figure 8A). Comme dans l'opération d'allumage primaire, la durée $\gamma$6 de l'inflammation du mélange est extrêmement brève (moins de 25 ms).

Une septième opération, dite de stabilisation secondaire, consiste à maintenir dans le récipient **2** le gaz résiduel (essentiellement un mélange d'air et de vapeur d'eau issue de la combustion de l'hydrogène, avec d'éventuelles traces de $NO_x$), pendant une durée $\gamma$7 prédéterminée (comprise entre 200 et 300 ms) en gardant fermées toutes les électrovannes **EV1**, **EV2**, **EV3**, **EV4** de manière à permettre la diminution de la température et de la pression dans le récipient 2 (figure 7I).

Une huitième opération, dite de soufflage, consiste à ouvrir la troisième électrovanne **EV3** pour introduire dans le récipient 2, via les trous **13** ménagés dans tige **12**, de l'air à haute pression (comprise entre 30 et 40 bar environ) à température ambiante et ainsi maintenir plaqué contre la paroi du moule **5** le récipient **2** formé lors des opérations d'allumage (figure 7J, ligne 4 sur la figure 8B). Pendant cette opération de soufflage, d'une durée $\gamma$8 prédéterminée (de préférence inférieure à 300 ms), la quatrième électrovanne **EV4** est maintenue fermée.

Une neuvième opération, dite de balayage, consiste à effectuer un balayage à l'air du récipient, en maintenant ouverte la troisième électrovanne **EV3** pour continuer à introduire dans le récipient **2** l'air à haute pression (figure 8B, ligne 4) à température ambiante, tout en ouvrant simultanément la quatrième électrovanne **EV4** pour permettre à l'air sous pression d'être évacué (figure 8B, ligne 5). On génère ainsi une circulation d'air dans le récipient **2** tout en le

maintenant sous pression (entre 10 et 15 bar), ce qui continue de le plaquer contre la paroi du moule **5** tout en le refroidissant (au moins du côté de sa paroi interne **42**) afin qu'il conserve au sortir du moule **5** la forme que celui-ci lui a conférée (figure 7K). Cette opération de balayage est réalisée pendant une durée $\gamma$9 prédéterminée, comprise entre 200 et 2000 ms.

Une dixième opération, dite de dégazage secondaire, consiste à dégazer le récipient 2 en fermant la troisième électrovanne **EV3** (figure 8B, ligne 4) et en laissant ouverte la quatrième électrovanne **EV4** pendant une durée $\gamma$10 prédéterminée (comprise entre 100 et 500 ms), pour laisser s'échapper l'air (figure 7L) jusqu'à ce que la pression régnant à l'intérieur du récipient **2** ait à peu près atteint la pression atmosphérique (figure 8B, ligne 5). A l'issue de cette opération, la quatrième électrovanne **EV4** est fermée, le moule 5 ouvert et le récipient **2** évacué pour permettre la répétition du cycle avec une nouvelle préforme.

On a mesuré par la DSC, dans les conditions décrites ci-dessus, la cristallinité dans l'épaisseur d'un récipient **2** obtenu par ce procédé. Les résultats des mesures sont présentés dans le tableau ci-après :

| Tranche | Cristallinité (%) |
|---|---|
| A (paroi interne) | 15 |
| B | 30 |
| C | 26 |
| D | 27 |
| E (paroi externe) | 28 |

On constate que le récipient **2** présente un gradient négatif de cristallinité au niveau de sa paroi interne **42.** La cristallinité mesurée du côté de la paroi interne **42** est en l'occurrence très inférieure (de 50% environ) à la cristallinité mesurée du côté de la paroi externe **43.**

On constate par ailleurs que la résistance mécanique à la déformation d'un tel récipient **2**, lors d'un remplissage à chaud (avec un liquide dont la température est comprise entre 85°C et 95°C), est supérieure à celle d'un récipient obtenu par un procédé sans allumage (Cf. l'exemple comparatif). De fait, pour une température de liquide comprise entre 85°C et 95°C, le taux de rétractation du récipient est inférieur ou égal à 1%.

On peut expliquer ce phénomène de la manière suivante. Les conditions extrêmes de température (qui atteint plusieurs centaines de degrés Celsius) et de pression régnant à l'intérieur du récipient 2 en cours de formation lors de la déflagration induite par l'allumage du mélange gazeux explosif provoquent la fusion du matériau au moins du côté de la paroi interne **42** du récipient **2.**

Après les déflagrations, le récipient **2** formé subit, du côté de sa paroi externe **43** en contact avec la paroi chauffée du moule **5**, une thermofixation. Il bénéficie ainsi, sur une certaine épaisseur à partir de sa paroi externe **43**, d'un apport de cristallinité par voie thermique cependant que sa paroi interne **42**, devenue complètement (ou presque) amorphe suite à sa fusion, conserve une forte proportion de matière amorphe, avec un taux de cristallinité comparativement plus faible.

Malgré le faible taux de cristallinité du côté de la paroi interne **42**, le taux de cristallinité élevé du côté de la paroi externe **43** confère au récipient 2 une rigidité équivalente à celle d'un récipient à cristallinité constante (tel qu'un récipient simplement thermofixé, obtenu par le procédé décrit dans l'exemple comparatif, c'est-à-dire sans allumage d'un mélange gazeux explosif), la portion de matière à cristallinité élevée (comprenant la paroi externe **43**) agissant à la manière d'une armature vis-à-vis de la portion de matière à faible cristallinité (comprenant la paroi interne **42**).

L'épaisseur de la paroi interne **42** correspond dans cet exemple à l'épaisseur de la tranche A telle que découpée pour les besoins de l'analyse DSC (cf. ci-dessus). Les mesures ont montré que le gradient de cristallinité ne s'étendait pas au-delà de la tranche C. Par conséquent, la paroi interne **42** affectée par le gradient négatif de cristallinité présente une épaisseur inférieure à 100 $\mu$m, et plus vraisemblablement inférieure à 50 $\mu$m environ.

Lors du remplissage à chaud, les contraintes résiduelles emmagasinées par le récipient **2** lors de sa formation sont relâchées en majeure partie dans la matière amorphe présente en forte proportion du côté de la paroi interne **42**, laquelle agit ainsi à la manière d'un tampon vis-à-vis de la portion de matière à cristallinité élevée en évitant la propagation de déformations dans le récipient.

Pour vérifier le caractère amorphe de la couche A, on a effectué une analyse thermique de ce récipient **2** par la DSC, en prélevant un échantillon similaire à celui utilisé pour la mesure de la cristallinité, et en le découpant de la même manière pour obtenir cinq tranches similaires A, B, C, D et E. Les courbes DSC des cinq tranches sont rassemblées sur le thermogramme de la figure 15. On constate que les courbes des tranches B, C, D et E présentent toutes un pic unique endothermique de fusion autour de 250°C, tandis que la courbe de la tranche A présente, outre ce même pic endothermique autour de 125°C, un pic exothermique aux environs de 250°C.

Ce pic endothermique, situé entre la température de transition vitreuse (en l'occurrence, environ 80°C) et le pic de fusion, est un pic de cristallisation, témoignant du caractère amorphe de la matière de la tranche A, du côté de la paroi interne **42** du récipient **2.** A contrario, l'absence d'un tel pic de cristallisation sur les courbes des autres tranches B à E, témoigne du caractère semi-cristallin de la matière, en particulier du côté de la paroi externe **43.** En d'autres termes, le récipient **2** peut être considéré, à l'issue de sa fabrication, comme amorphe du côté de sa paroi interne **42.**

Par comparaison, on a effectué la même analyse sur un échantillon prélevé sur un récipient obtenu par le procédé décrit dans l'exemple comparatif (c'est-à-dire sans allumage d'un mélange gazeux explosif). On constate (figure 16) que les courbes DSC des cinq tranches A à E de l'échantillon ne présentent qu'un seul pic, endothermique, correspondant à la fusion de la matière aux environ de 250°C, ce qui indique que le récipient est semi-cristallin dans toute son épaisseur, y compris du côté de sa paroi interne.

<u>Exemple 4 (figures 9A à 9K, 10A, 10B)</u>

Dans cet exemple, le moule **5** est chauffé de sorte à présenter du côté de sa paroi interne une température de 130°C environ. Le matériau de la préforme **3** est un PET. Le gaz réactif est de l'hydrogène ($H_2$). Le mélange gazeux air/hydrogène est effectué en respectant une proportion d'hydrogène en volume comprise entre 4% et 18%, de préférence de 6%.

Après introduction de la préforme **3** chaude dans le moule **5**, une première opération, dite de présoufflage primaire, consiste à étirer la préforme **3** par coulissement de la tige **12**, et simultanément à la présouffler en ouvrant la première électrovanne **EV1** pour introduire dans la préforme 3 de l'air à une pression moyenne, comprise entre 5 et 20 bar environ (figures 9A à 9C, ligne 1 sur la figure 10B). Cette première opération, d'une durée $\delta 1$ prédéterminée (inférieure à 250 ms) se termine par la fermeture de la première électrovanne **EV1** après que la tige **12** a terminé sa course en ayant atteint le fond de moule **7**, et que le seuil d'écoulement plastique du matériau est dépassé (ce qui se matérialise sur la courbe de pression par un premier pic de pression, aux environs de 8 à 10 bar).

Une seconde opération, dite de soufflage, consiste à souffler le récipient **2** en ouvrant la troisième électrovanne **EV3** pour introduire dans le récipient **2** en formation, via les trous **13** ménagés dans tige **12**, de l'air à haute pression (comprise entre 30 et 40 bar environ) à température ambiante de sorte à plaquer le récipient **2** contre la paroi du moule **5** (figure 9D, ligne 4 sur la figure 10B). Pendant cette opération de soufflage, d'une durée $\delta 2$ prédéterminée (de préférence inférieure à 300 ms), la quatrième électrovanne **EV4** est maintenue fermée.

Une troisième opération, dite de dégazage primaire, consiste à dégazer le récipient **2** en ouvrant la quatrième électrovanne **EV4** pendant une durée $\delta 3$ prédéterminée (comprise entre 100 et 200 ms), pour laisser s'échapper l'air (figure 9E) jusqu'à ce que la pression régnant à l'intérieur du récipient **2** ait à peu près atteint la pression atmosphérique (figure 10B, ligne 5).

Une quatrième opération, dite de présoufflage secondaire, consiste à ouvrir de nouveau les électrovannes **EV1** et **EV2** pour introduire dans le récipient **2** un mélange d'air et de gaz réactif à une pression moyenne, comprise entre 5 et 20 bar environ (figures 9F, lignes 1 et 2 sur la figure 10B). Cette quatrième opération, d'une durée $\delta 4$ prédéterminée (inférieure à 250 ms) se termine par la fermeture des électrovannes **EV1** et **EV2** après que la pression dans le récipient **2** a atteint une valeur comprise entre 5 et 20 bar.

Une cinquième opération, dite d'allumage, consiste à enflammer le mélange gazeux par allumage de la bougie **36** (figure 9G, ligne 3 sur la figure 10B). Compte tenu de la proportion d'hydrogène dans le mélange, il se produit dans le récipient **2** une déflagration accompagnée d'une augmentation brusque de la température (qui atteint de nouveau plusieurs centaines de degrés Celsius) et de la pression (qui dépasse 40 bar - sur la courbe de la figure 10A le pic de pression correspondant est écrêté pour des raisons d'échelle). La durée $\delta 5$ de l'inflammation du mélange est extrêmement brève (moins de 25 ms).

Une sixième opération, dite de stabilisation, consiste à maintenir dans le récipient 2 le gaz résiduel (essentiellement un mélange d'air et de vapeur d'eau issue de la combustion de l'hydrogène, avec d'éventuelles traces de $NO_x$), pendant une durée $\delta 6$ prédéterminée (comprise entre 200 et 300 ms) en gardant fermées toutes les électrovannes **EV1**, **EV2**, **EV3**, **EV4** de manière à permettre la diminution de la température et de la pression dans le récipient **2** (figure 9H).

Une septième opération, dite de soufflage secondaire, consiste à ouvrir la troisième électrovanne **EV3** pour introduire dans le récipient **2**, via les trous **13** ménagés dans tige **12**, de l'air à haute pression (comprise entre 30 et 40 bar environ) à température ambiante et ainsi maintenir plaqué contre la paroi du moule **5** le récipient **2** formé lors des opérations d'allumage et de soufflage primaire (figure 9I, ligne 4 sur la figure 10B). Pendant cette opération de soufflage, d'une durée $\delta 7$ prédéterminée (de préférence inférieure à 300 ms), la quatrième électrovanne **EV4** est maintenue fermée.

Une huitième opération, dite de balayage, consiste à effectuer un balayage à l'air du récipient **2**, en maintenant ouverte la troisième électrovanne **EV3** pour continuer à introduire dans le récipient **2** l'air à haute pression (figure 10B, ligne 4) à température ambiante, tout en ouvrant simultanément la quatrième électrovanne **EV4** pour permettre à l'air sous pression d'être évacué (figure 10B, ligne 5). On génère ainsi une circulation d'air dans le récipient 2 tout en le maintenant sous pression (entre 10 et 15 bar), ce qui continue de le plaquer contre la paroi du moule **5** tout en le

refroidissant (au moins du côté de sa paroi interne) afin qu'il conserve au sortir du moule **5** la forme que celui-ci lui a conférée (figure 9J). Cette opération de balayage est réalisée pendant une durée δ8 prédéterminée, comprise entre 200 et 2000 ms.

Une neuvième opération, dite de dégazage secondaire, consiste à dégazer le récipient **2** en fermant la troisième électrovanne **EV3** (figure 10B, ligne 4) et en laissant ouverte la quatrième électrovanne **EV4** pendant une durée δ9 prédéterminée (comprise entre 100 et 500 ms), pour laisser s'échapper l'air (figure 9K) jusqu'à ce que la pression régnant à l'intérieur du récipient **2** ait à peu près atteint la pression atmosphérique (figure 10B, ligne 5). A l'issue de cette opération, la quatrième électrovanne **EV4** est fermée, le moule **5** ouvert et le récipient **2** évacué pour permettre la répétition du cycle avec une nouvelle préforme.

On a mesuré par la DSC, dans les conditions décrites ci-dessus, la cristallinité d'un récipient **2** obtenu par ce procédé, du côté de la paroi interne **42** du corps **10** (tranche A) et du côté de sa paroi externe **43** (tranche E). Les résultats des mesures sont présentés dans le tableau ci-après :

| Tranche | Cristallinité |
|---|---|
| A (paroi interne) | 25 |
| E (paroi externe) | 31 |

On constate que le récipient **2** présente un gradient négatif de cristallinité au niveau de sa paroi interne **42.** La cristallinité mesurée du côté de la paroi interne **42** est en l'occurrence bien inférieure (de 20% environ) à la cristallinité mesurée du côté de la paroi externe **43.**

On constate par ailleurs que la résistance mécanique à la déformation d'un tel récipient **2**, lors d'un remplissage à chaud (avec un liquide dont la température est comprise entre 85°C et 95°C), est supérieure à celle d'un récipient obtenu par un procédé sans allumage (Cf. l'exemple comparatif). De fait, pour une température de liquide comprise entre 85°C et 95°C, le taux de rétractation du récipient est inférieur ou égal à 1 %.

On peut expliquer ce phénomène de la manière suivante. Les conditions extrêmes de température (qui atteint plusieurs centaines de degrés Celsius) et de pression régnant à l'intérieur du récipient **2** en cours de formation lors de la déflagration induite par l'allumage du mélange gazeux explosif provoquent la fusion du matériau au moins du côté de la paroi interne **42** du récipient **2.**

Après la déflagration, le récipient 2 formé subit, du côté de sa paroi externe **43** en contact avec la paroi chauffée du moule **5**, une thermofixation. Il bénéficie ainsi, sur une certaine épaisseur à partir de sa paroi externe **43,** d'un apport de cristallinité, par voie thermique cependant que sa paroi interne **42**, devenue complètement (ou presque) amorphe suite à sa fusion, conserve une forte proportion de matière amorphe, avec un taux de cristallinité comparativement plus faible.

Malgré le faible taux de cristallinité du côté de la paroi interne **42**, le taux de cristallinité élevé du côté de la paroi externe **43** confère au récipient **2** une rigidité équivalente à celle d'un récipient à cristallinité constante (tel qu'un récipient simplement thermofixé, obtenu par le procédé décrit dans l'exemple comparatif, c'est-à-dire sans allumage d'un mélange gazeux explosif), la portion de matière à cristallinité élevée (comprenant la paroi externe **43**) agissant à la manière d'une armature vis-à-vis de la portion de matière à faible cristallinité (comprenant la paroi interne **42**).

L'épaisseur de la paroi interne **42** correspond dans cet exemple à l'épaisseur de la tranche A telle que découpée pour les besoins de l'analyse DSC (cf. ci-dessus). Les mesures ont montré que le gradient de cristallinité ne s'étendait pas au-delà de la tranche C. Par conséquent, la paroi interne **42** affectée par le gradient négatif de cristallinité présente une épaisseur inférieure à 100 μm, et plus vraisemblablement inférieure à 50 μm environ.

Lors du remplissage à chaud, les contraintes résiduelles emmagasinées par le récipient **2** lors de sa formation sont relâchées en majeure partie dans la matière amorphe présente en forte proportion du côté de la paroi interne **42**, laquelle agit ainsi à la manière d'un tampon vis-à-vis de la portion de matière à cristallinité élevée en évitant la propagation de déformations dans le récipient.

<u>Exemple comparatif (figures 11A à 11F, 12A, 12B, 16)</u>

Dans cet exemple, le moule **5** est chauffé de sorte à présenter du côté de sa paroi interne une température de 160°C environ. Le matériau de la préforme est un PET.

Après introduction de la préforme **3** chaude dans le moule **5**, une première opération, dite de présoufflage, consiste à étirer la préforme **3** par coulissement de la tige **12**, et simultanément à la présouffler en ouvrant la première électrovanne **EV1** pour introduire dans la préforme **3** de l'air à une pression moyenne, comprise entre 5 et 20 bar environ (figures 11A à 11C, ligne 1 sur la figure 12B). Cette première opération, d'une durée ε1 prédéterminée (inférieure à 250 ms) se termine par la fermeture de la première électrovanne **EV1** après que la tige **12** a terminé sa course en ayant

atteint le fond de moule **7**, et que le seuil d'écoulement plastique du matériau est dépassé (ce qui se matérialise sur la courbe de pression par un premier pic de pression aux environs de 8 à 10 bar).

Une seconde opération, dite de soufflage, consiste à souffler la préforme **3** en ouvrant la troisième électrovanne **EV3** pour introduire dans la préforme **3**, via les trous **13** ménagés dans tige **12**, de l'air à haute pression (comprise entre 30 et 40 bar environ) à température ambiante de sorte à plaquer le récipient **2** en formation contre la paroi du moule **5** (figure 11D, ligne 4 sur la figure 12B). Pendant cette opération de soufflage, d'une durée $\varepsilon 2$ prédéterminée (comprise entre 500 et 1200 ms), la quatrième électrovanne **EV4** est maintenue fermée.

Une troisième opération, dite de balayage, consiste à effectuer un balayage à l'air du récipient **2**, en ouvrant la troisième électrovanne **EV3** pour introduire dans le récipient **2** de l'air sous pression à température ambiante via les trous **13** ménagés dans tige **12** (figure 12B, ligne 4), et en ouvrant simultanément la quatrième électrovanne **EV4** pour permettre à l'air sous pression d'être évacué (figure 12B, ligne 5). On génère ainsi une circulation d'air dans le récipient **2** tout en le maintenant sous pression (entre 10 et 15 bar), de sorte à le plaquer contre la paroi du moule **5** (figure 12E). Cette opération de balayage est réalisée pendant une durée $\varepsilon 3$ prédéterminée, comprise entre 500 et 800 ms.

Une quatrième opération, dite de dégazage, consiste à dégazer le récipient **2** en fermant la troisième électrovanne **EV3** (figure 12B, ligne 4) et en laissant ouverte la quatrième électrovanne **EV4** pendant une durée $\varepsilon 5$ prédéterminée (comprise entre 200 et 500 ms), pour laisser s'échapper l'air (figure 11F) jusqu'à ce que la pression régnant à l'intérieur du récipient **2** ait à peu près atteint la pression atmosphérique (figure 12B, ligne 5). A l'issue de cette opération, la quatrième électrovanne **EV4** est fermée, le moule **5** ouvert et le récipient **2** évacué pour permettre la répétition du cycle avec une nouvelle préforme.

On a mesuré par la DSC, dans les conditions décrites ci-dessus, la cristallinité d'un récipient obtenu par ce procédé, au niveau de la paroi interne du corps du récipient (tranche A) et au niveau de sa paroi externe (tranche E). Les résultats des mesures sont présentés dans le tableau ci-après :

| Tranche | Cristallinité |
|---|---|
| A (paroi interne) | 31 |
| B | 24 |
| C | 28 |
| D | 35 |
| E (paroi externe) | 30 |

On constate que la cristallinité est sensiblement constante depuis la tranche A (paroi interne **42**) jusqu'à la tranche E (paroi externe **43**), ce qui témoigne du caractère sensiblement uniforme, dans l'épaisseur du récipient **2,** de la thermofixation réalisée par ce procédé.

On a effectué une analyse thermique de ce récipient **2** par la DSC, en prélevant un échantillon similaire à celui utilisé pour la mesure de la cristallinité, et en le découpant de la même manière pour obtenir cinq tranches similaires A, B, C, D et E. Les courbes DSC des cinq tranches sont rassemblées sur le thermogramme de la figure 16. On constate que les courbes présentent toutes un pic unique endothermique de fusion autour de 250°C, ce qui témoigne du caractère semi-cristallin de la matière dans toute l'épaisseur du récipient **2.**

On constate par ailleurs que la résistance mécanique à la déformation d'un tel récipient **2**, lors d'un remplissage à chaud (avec un liquide dont la température est comprise entre 85°C et 95°C), est inférieure à celle d'un récipient obtenu par un procédé avec allumage. Pour une température de liquide comprise de 90°C par exemple, le taux de rétractation du récipient est 2%. En outre, pour une température de liquide de 95°C, le remplissage est impossible sans que le récipient **2** soit déformé (le récipient se bombe à la manière d'un tonneau) au-delà de ce qui est commercialement admissible.

## Revendications

**1.** Récipient (**2**) en PET, ayant une paroi interne (**42**) et une paroi externe (**43**) opposées, ce récipient étant thermofixé, et la paroi interne (**42**) présentant :

- un taux de cristallinité dont le gradient est négatif, **caractérisé en ce que**: - le récipient est obtenu par un procédé avec allumage, et - la paroi interne (42) présente sur une courbe DSC, un pic exothermique entre la température de transition vitreuse et un pic de fusion.

2. Récipient (**2**) selon la revendication 1, dans lequel le taux de cristallinité du côté de la paroi interne (**42**) est inférieur ou égal à 25%.

3. Récipient (**2**) selon la revendication 1 ou 2, dans lequel le taux de cristallinité du côté de la paroi externe (**43**) est supérieur ou égal à 30%.

4. Récipient selon l'une des revendications 1 à 3, dans lequel le taux de cristallinité du côté de la paroi interne (**42**) est inférieur de 20% à 50% environ au taux de cristallinité du côté de la paroi externe (**43**).

5. Récipient selon l'une des revendications 1 à 4, dont la paroi interne (**42**) présente une épaisseur inférieure à 100 μm environ.

6. Récipient selon la revendication 5, dont la paroi interne (**42**) présente une épaisseur inférieure à 50 μm environ.

## Patentansprüche

1. Behälter (2) aus PET mit einer Innenwand (42) und einer Außenwand (43), die einander gegenüberliegen, wobei der Behälter thermofixiert ist und die Innenwand (42)

   - einen Kristallinitätsgrad mit negativem Gradienten
   aufweist, **dadurch gekennzeichnet, dass**
   - der Behälter durch ein Verfahren mit Zündung hergestellt worden ist und
   - die Innenwand (42) auf einer DSC-Kurve einen exothermen Peak zwischen der Glasübergangstemperatur und einem Schmelzpeak aufweist.

2. Behälter (2) nach Anspruch 1, wobei der Kristallinitätsgrad der Seite der Innenwand (42) kleiner gleich 25% ist.

3. Behälter (2) nach Anspruch 1 oder 2, wobei der Kristallinitätsgrad der Seite der Außenwand (43) größer gleich 30% ist.

4. Behälter nach einem der Ansprüche 1 bis 3, bei dem der Kristallinitätsgrad der Seite der Innenwand (42) weniger als etwa 20% bis 50% des Kristallinitätsgrads der Seite der Außenwand (43) beträgt.

5. Behälter nach einem der Ansprüche 1 bis 4, dessen Innenwand (42) eine Dicke von weniger als etwa 100 μm aufweist.

6. Behälter nach Anspruch 5, dessen Innenwand (42) eine Dicke von weniger als etwa 50 μm aufweist.

## Claims

1. Container (**2**) made of PET, having an internal wall (**42**) and an external wall (**43**) which are facing, this container being heat set, and the internal wall (**42**) exhibiting:

   - a degree of crystallinity, the gradient of which is negative, **characterized in that**:
   - the container is obtained by a process with ignition, and
   - the internal wall (**42**) exhibits, on a DSC curve, an exothermic peak between the glass transition temperature and a melting peak.

2. Container (**2**) according to Claim 1, in which the degree of crystallinity on the side of the internal wall (**42**) is less than or equal to 25%.

3. Container (**2**) according to Claim 1 or 2, in which the degree of crystallinity on the side of the external wall (**43**) is greater than or equal to 30%.

4. Container according to one of Claims 1 to 3, in which the degree of crystallinity on the side of the internal wall (**42**) is less by 20% to 50% approximately than the degree of crystallinity on the side of the external wall (**43**).

5. Container according to one of Claims 1 to 4, the internal wall (**42**) of which exhibits a thickness of less than approx-

imately 100 μm.

6. Container according to Claim 5, the internal wall (**42**) of which exhibits a thickness of less than approximately 50 μm.

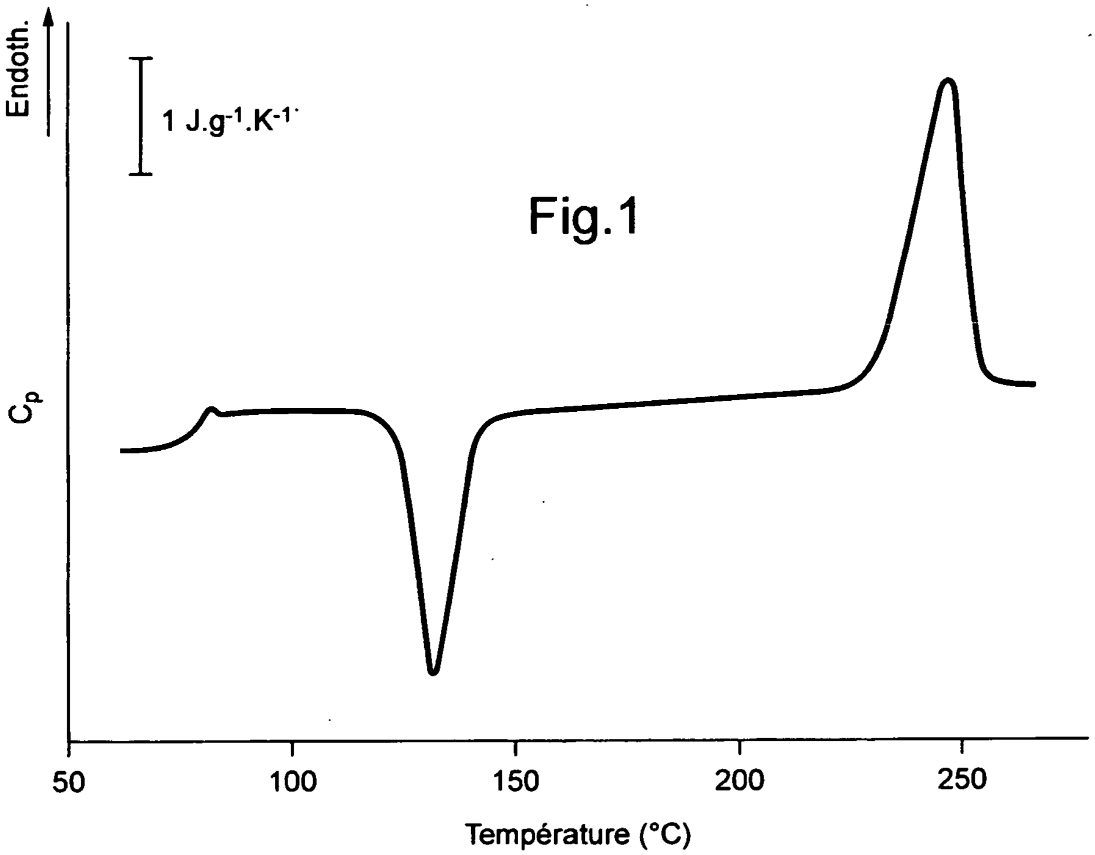


Fig.1

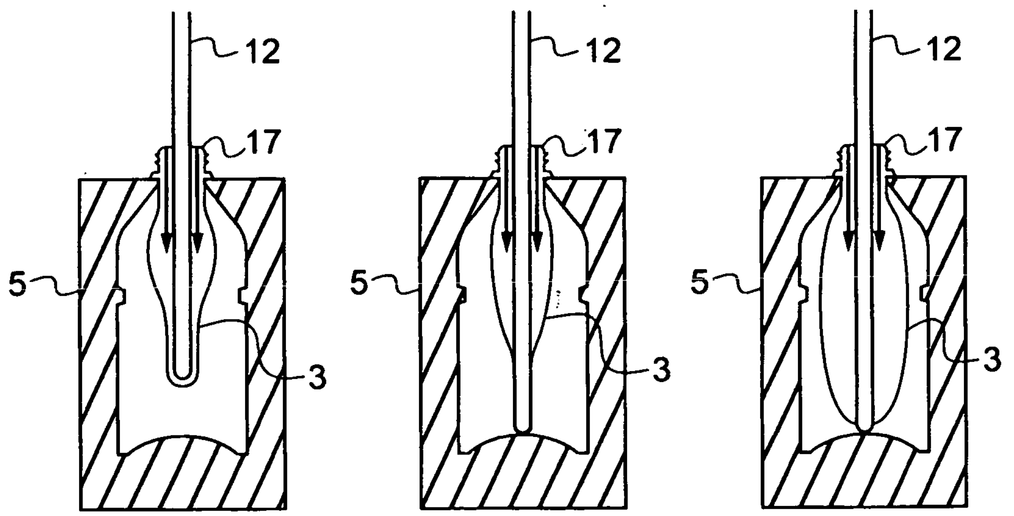


Fig.3A Fig.3B Fig.3C

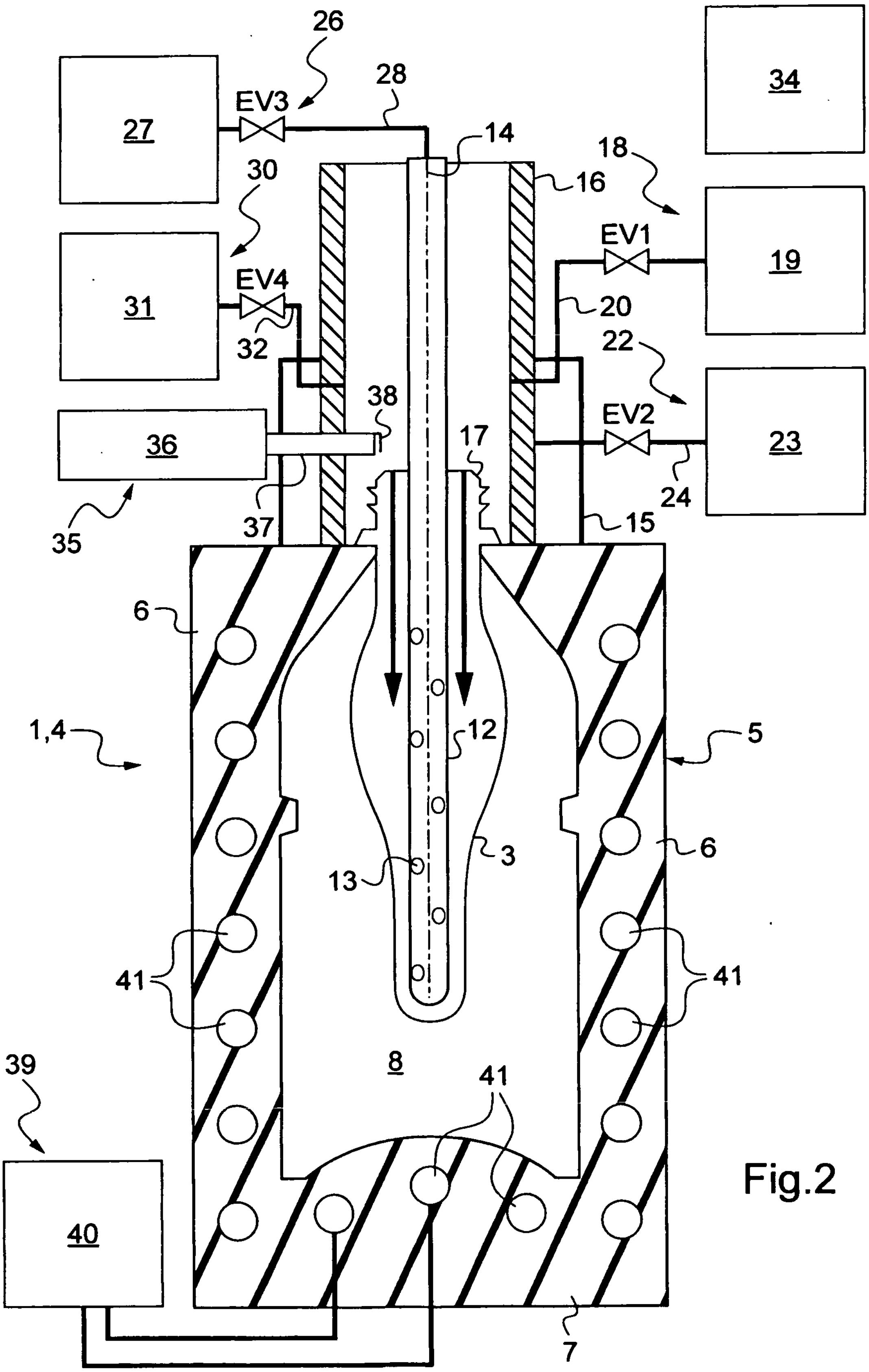
26
28
EV3
27
14
34
18
16
30
EV1
19
31
EV4
20
32
22
38
17
EV2
36
23
24
15
37
35
6
1,4
12
5
6
3
13
41
41
39
8
41
40
7

Fig.2

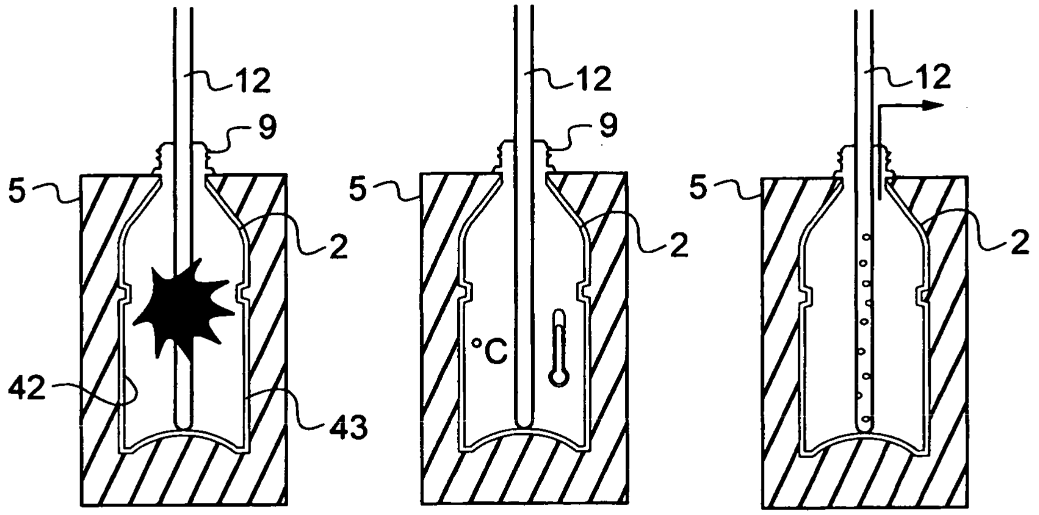


Fig.3D Fig.3E Fig.3F

Fig.4A

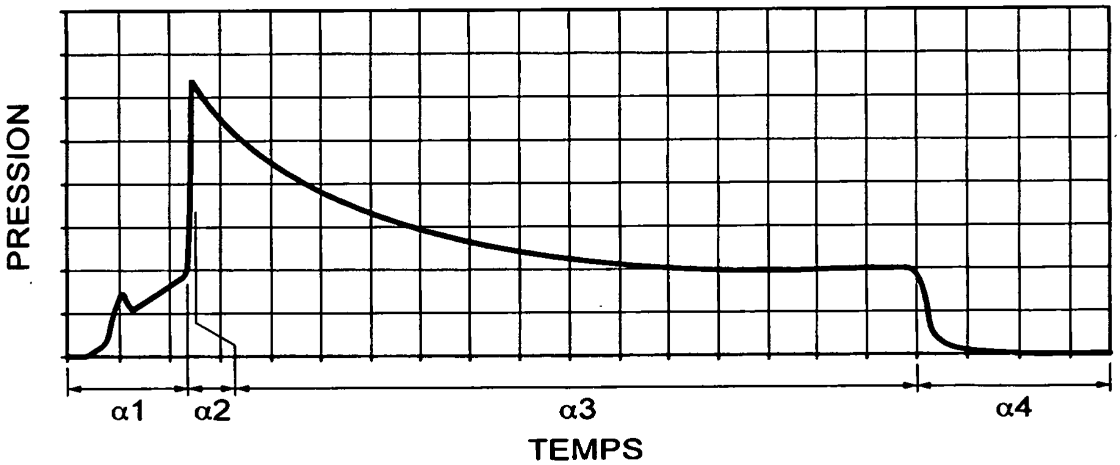


Fig.4B

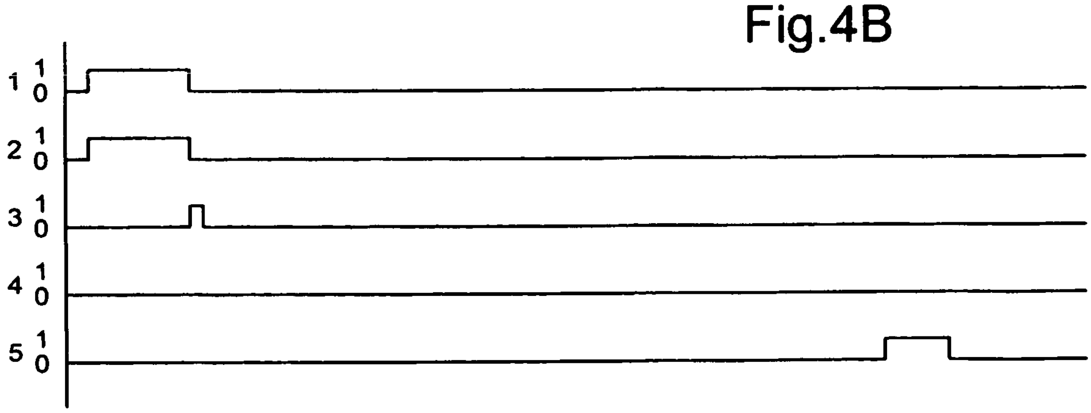

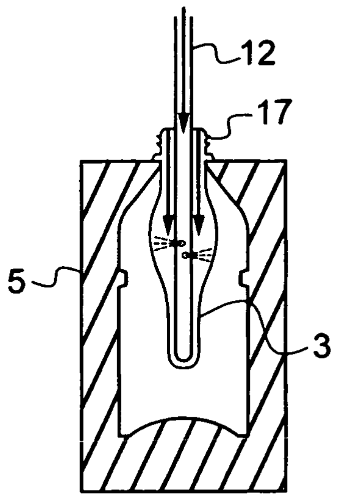

Fig.5A

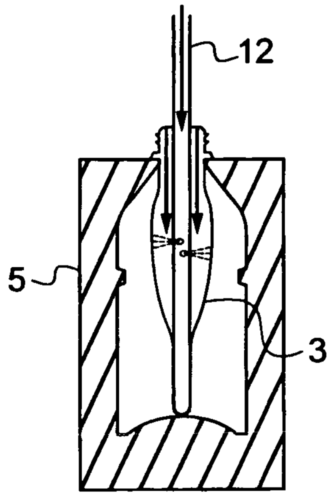

Fig.5B

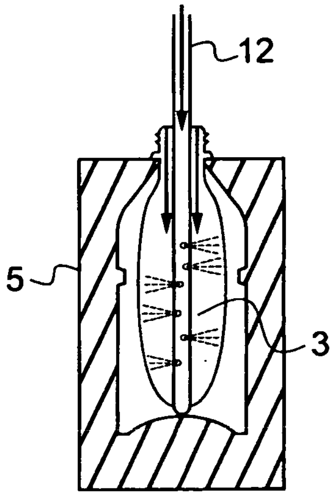

Fig.5C

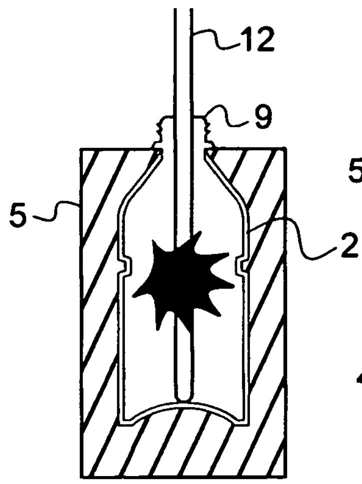

Fig.5D

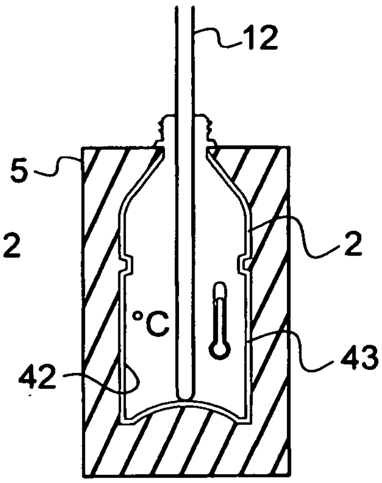

Fig.5E

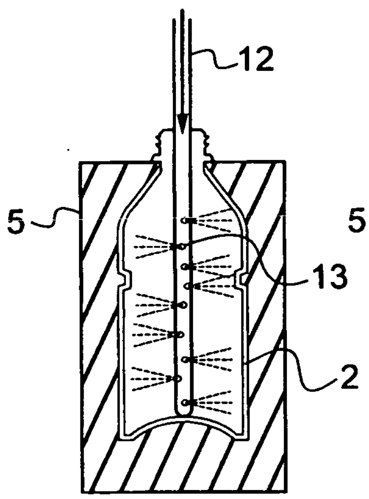

Fig.5F

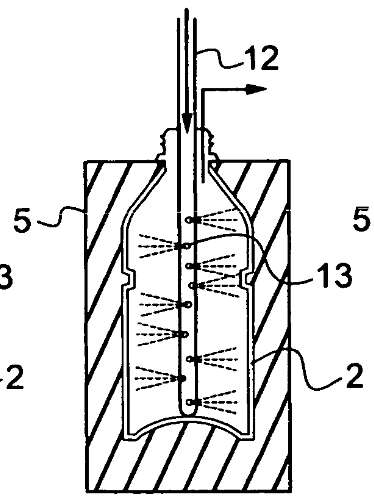

Fig.5G

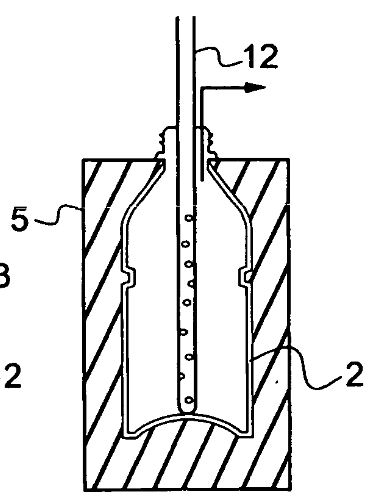

Fig.5H

Fig.6A

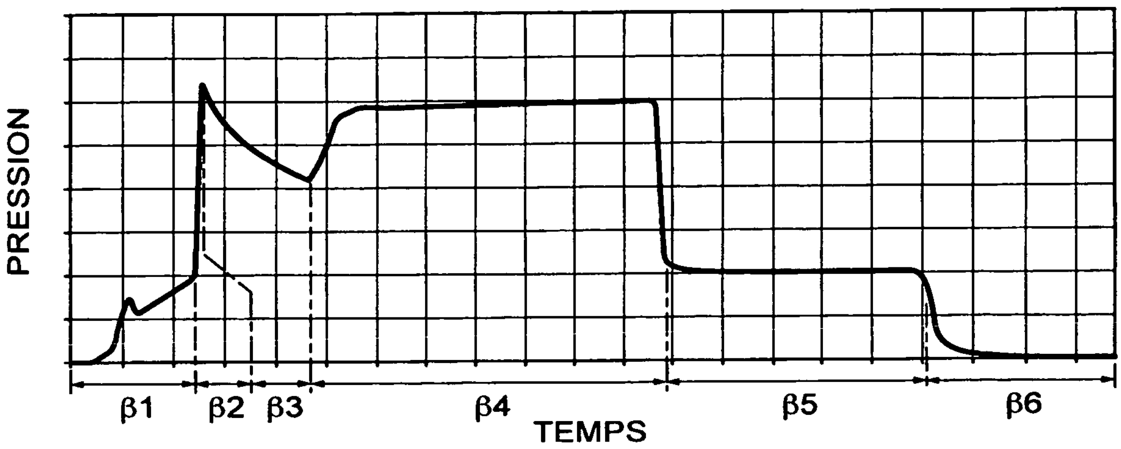


Fig.6B

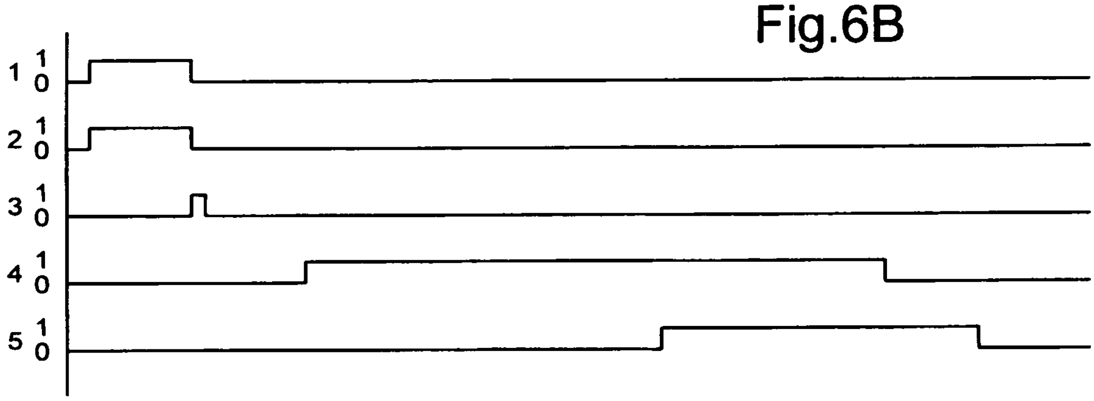


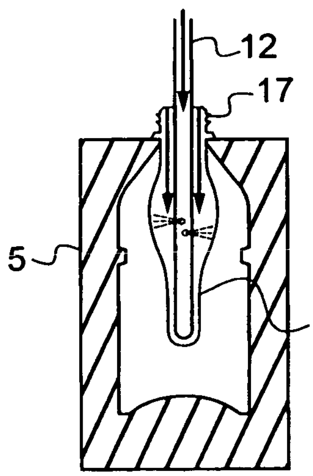


Fig.7A

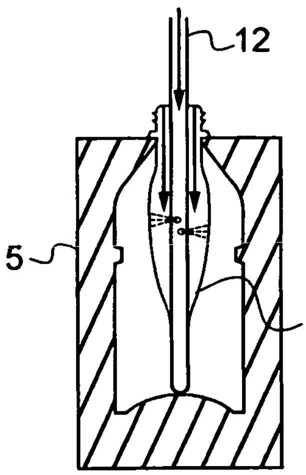


Fig.7B

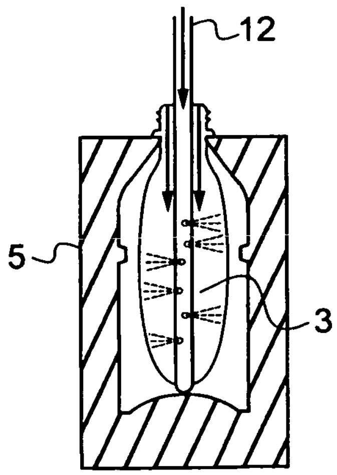


Fig.7C

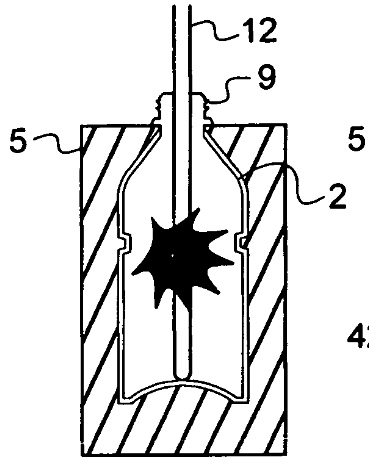

Fig.7D

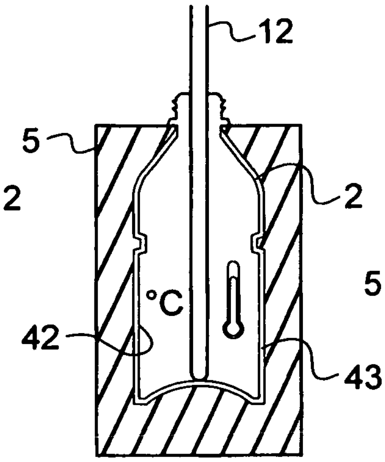

Fig.7E

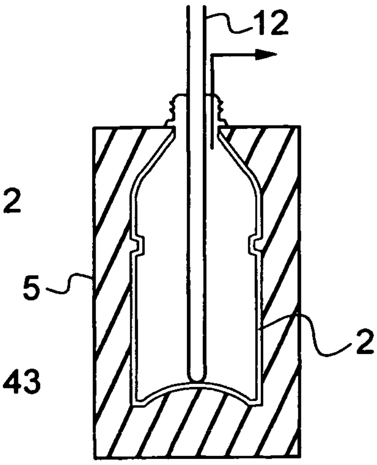

Fig.7F

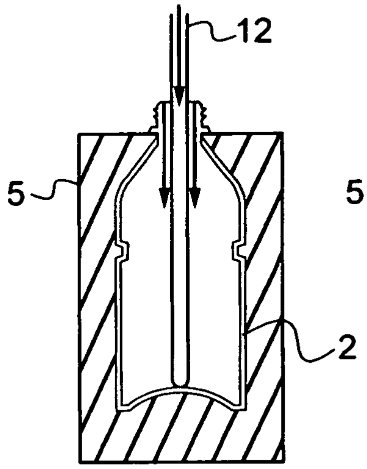

Fig.7G

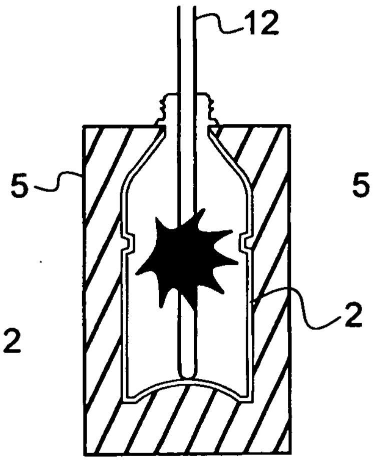

Fig.7H

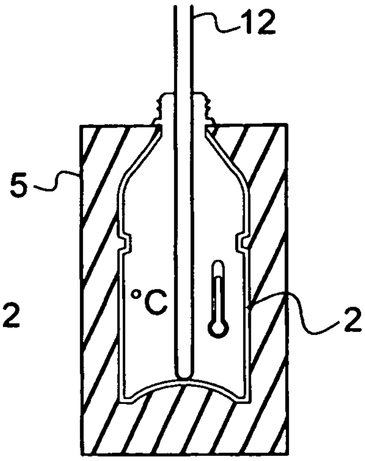

Fig.7İ

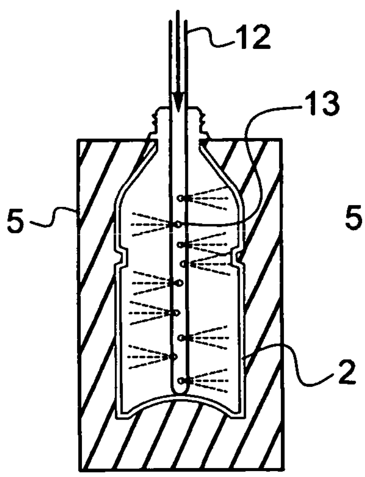

Fig.7J

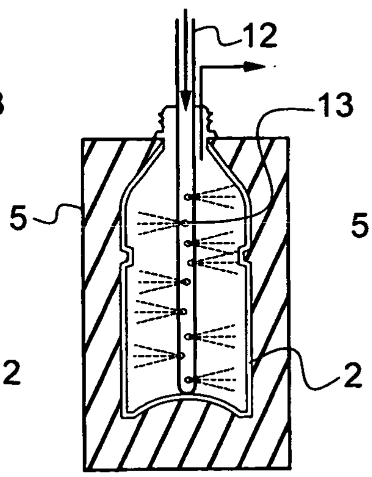

Fig.7K

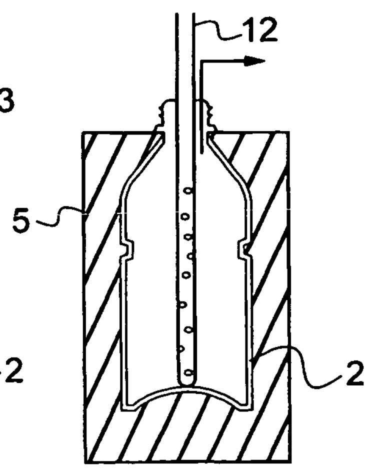

Fig.7L

Fig.8A

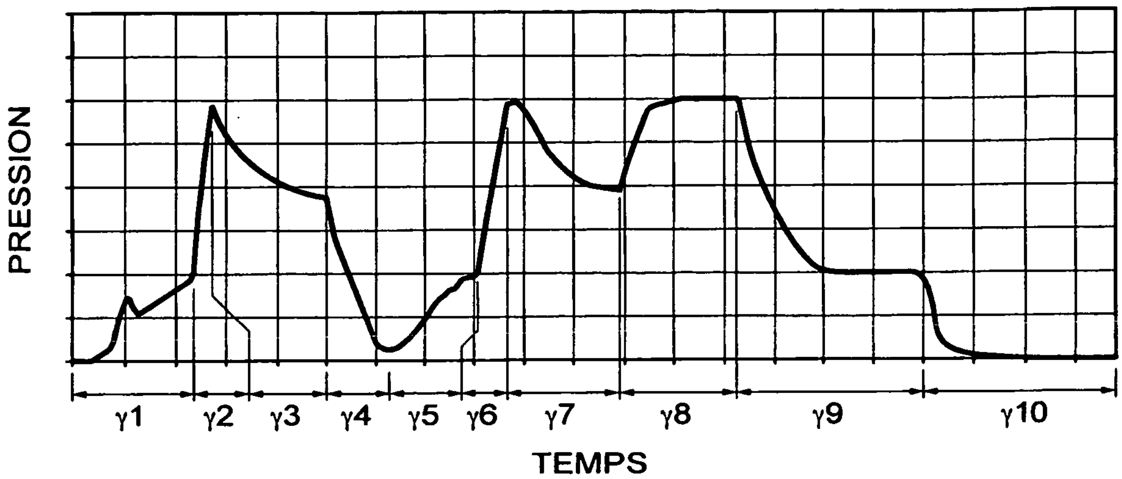


Fig.8B

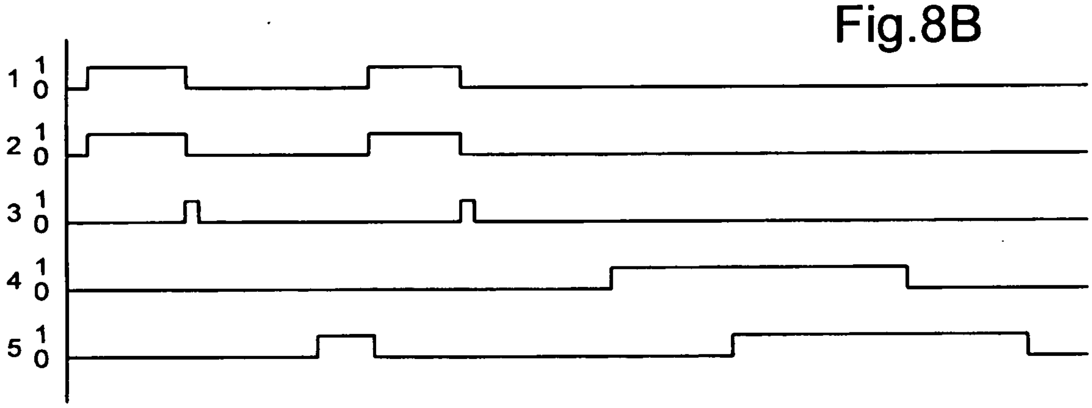


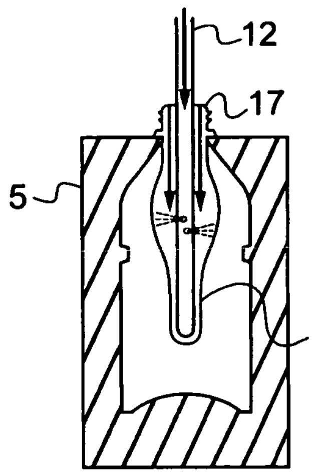


Fig.9A

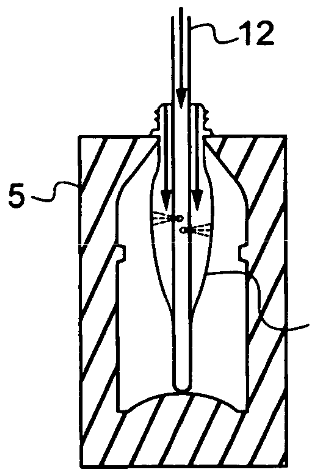


Fig.9B

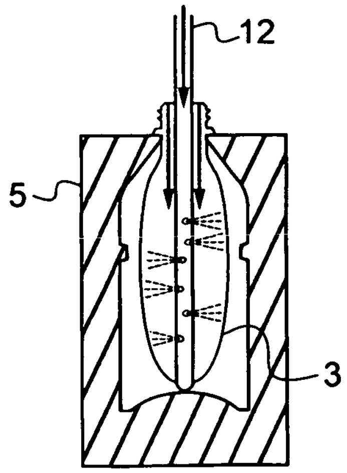


Fig.9C

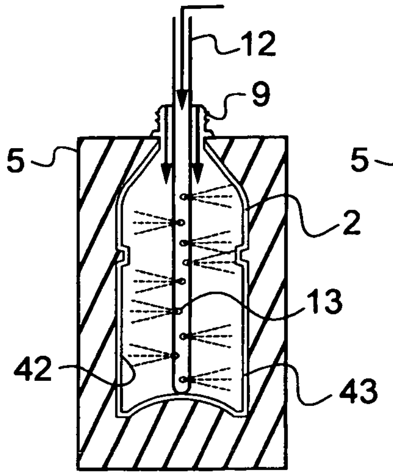

Fig.9D

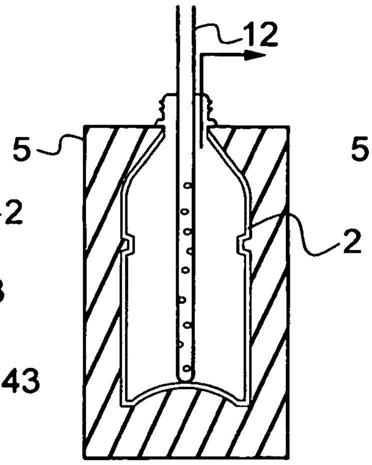

Fig.9E

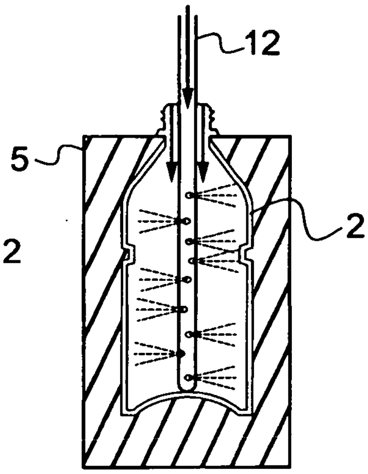

Fig.9F

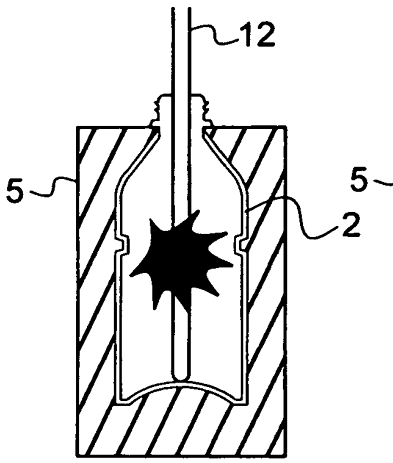

Fig.9G

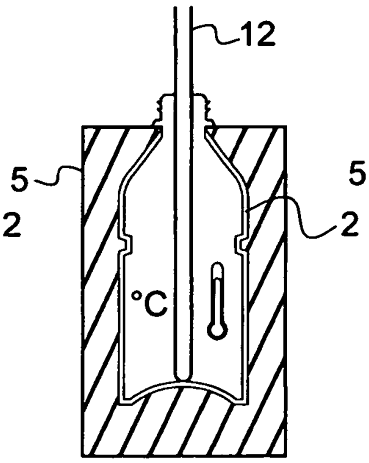

Fig.9H

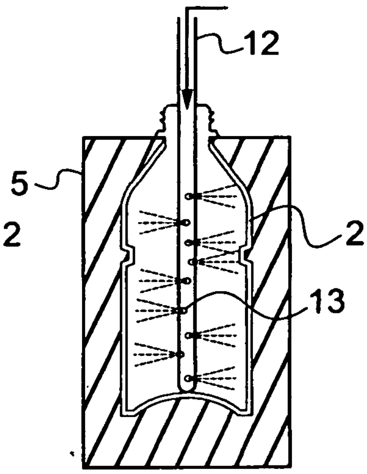

Fig.9I

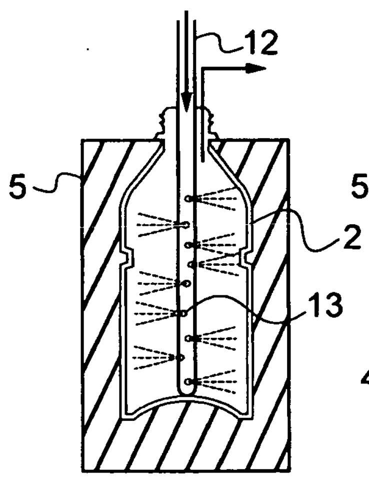

Fig.9J

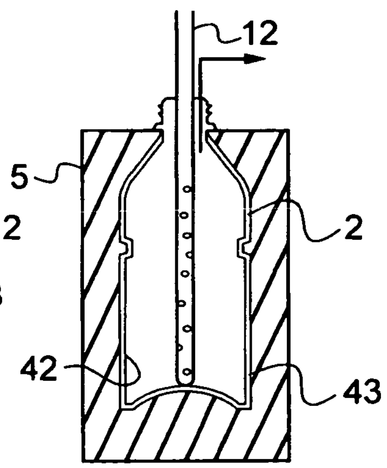

Fig.9K

Fig.10A

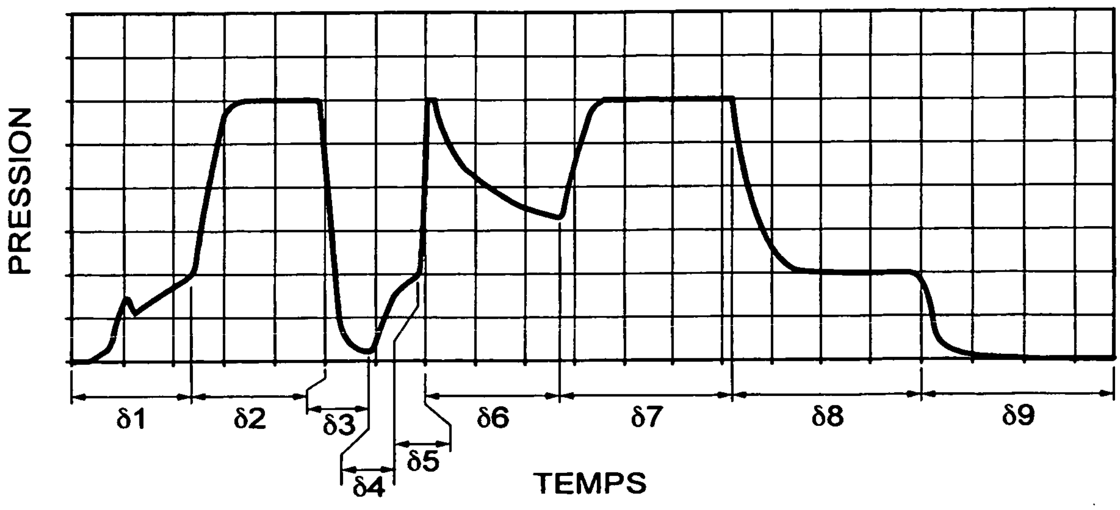


Fig.10B

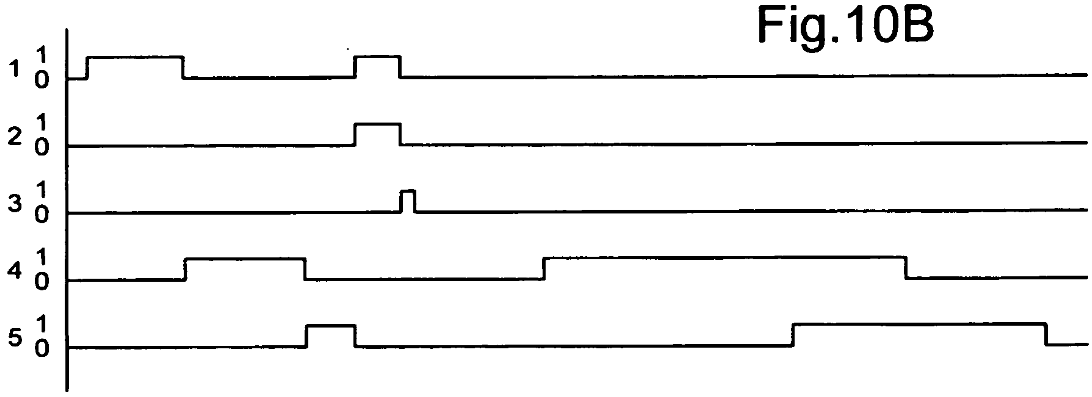


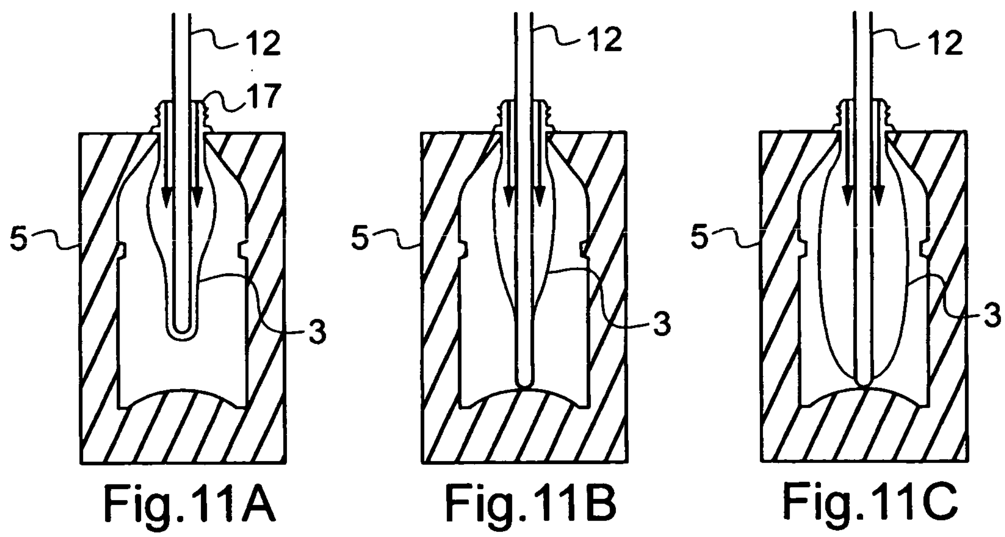


Fig.11A Fig.11B Fig.11C

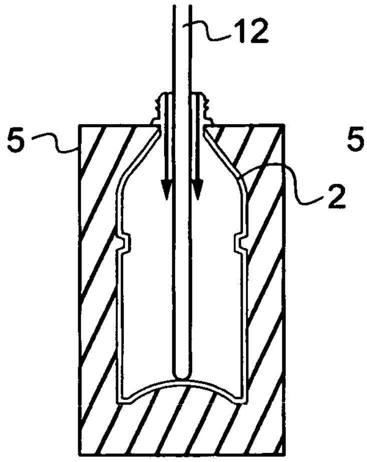


Fig.11D

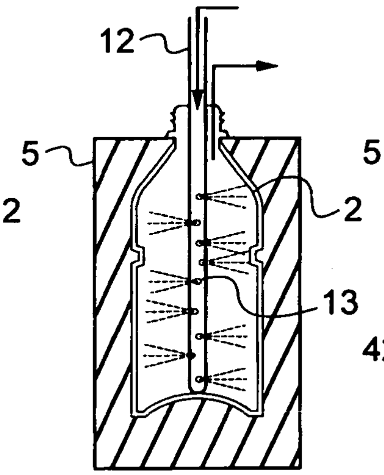


Fig.11E

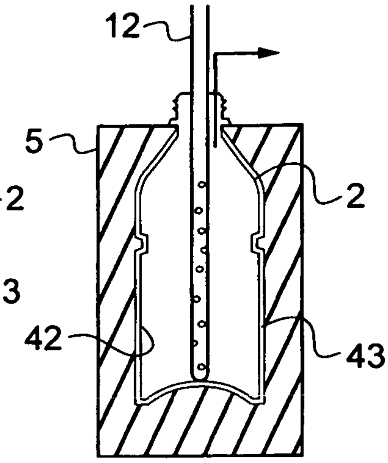


Fig.11F

Fig.12A

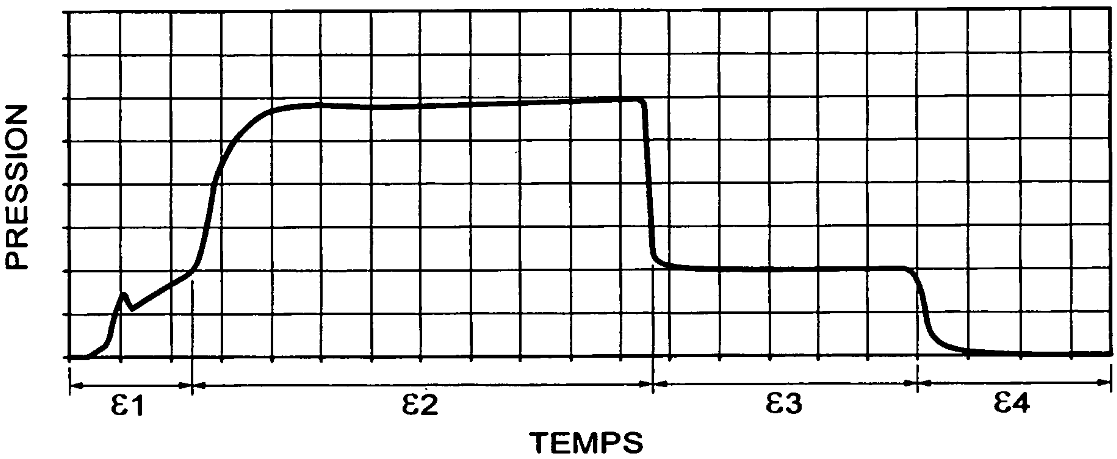


Fig.12B

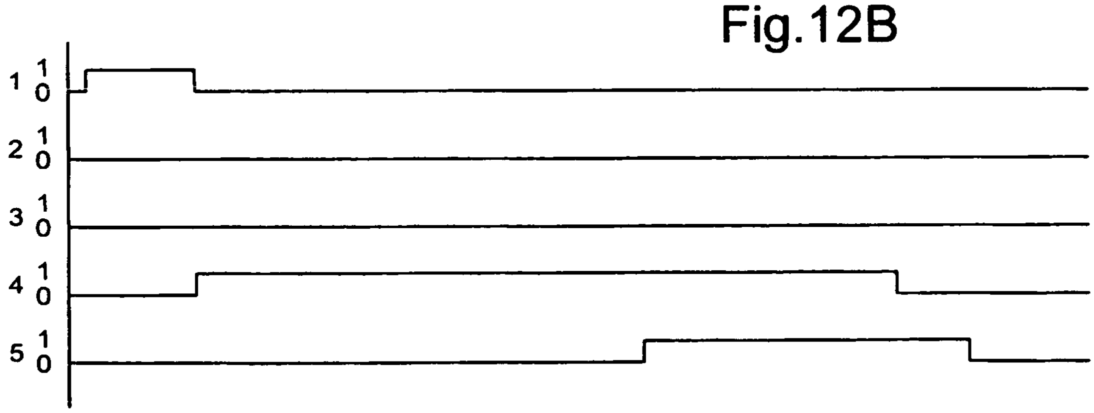

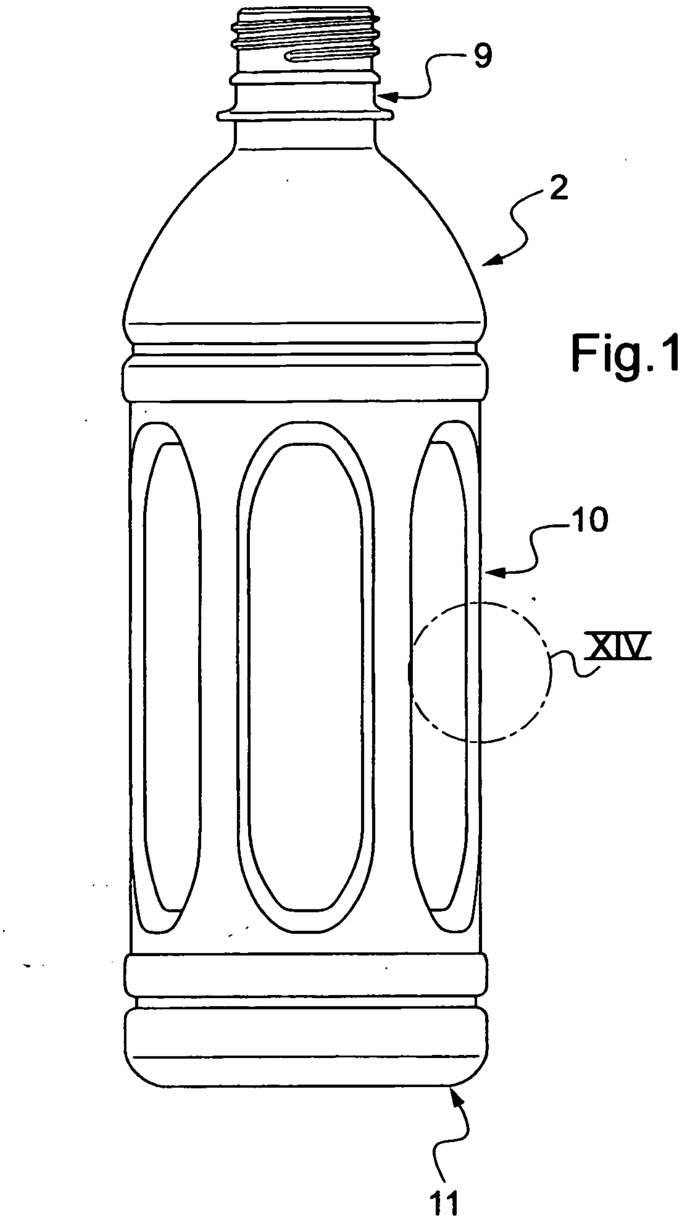


Fig.13

Fig.14

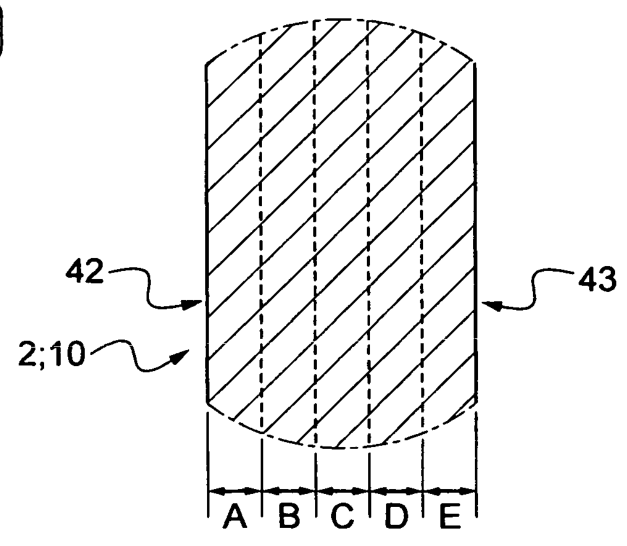

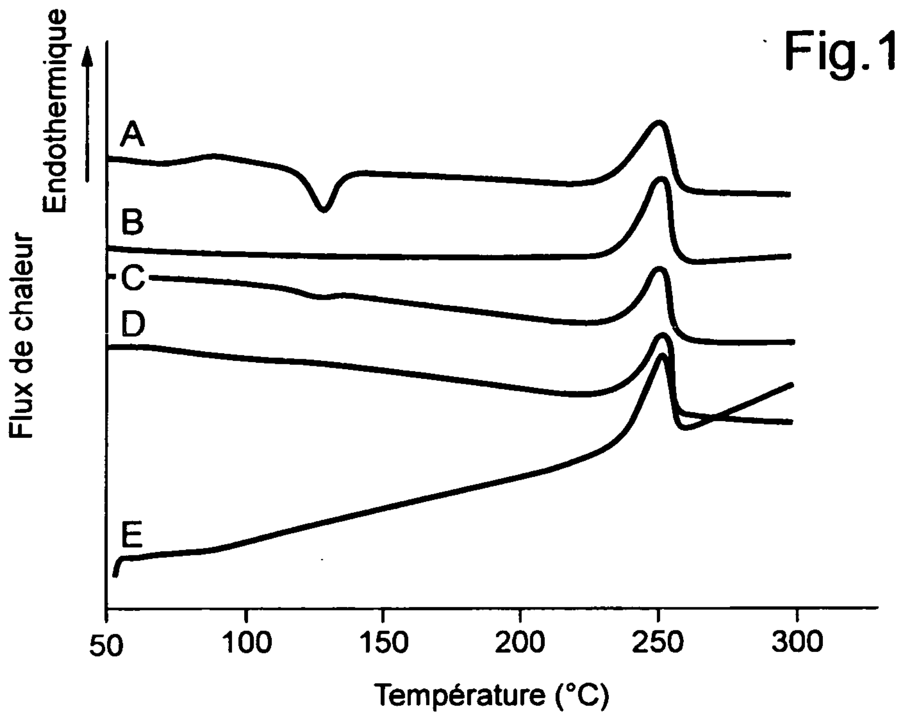
Endothermique
Flux de chaleur
A
B
C
D
E
50
100
150
200
250
300
Température (°C)

Fig.15

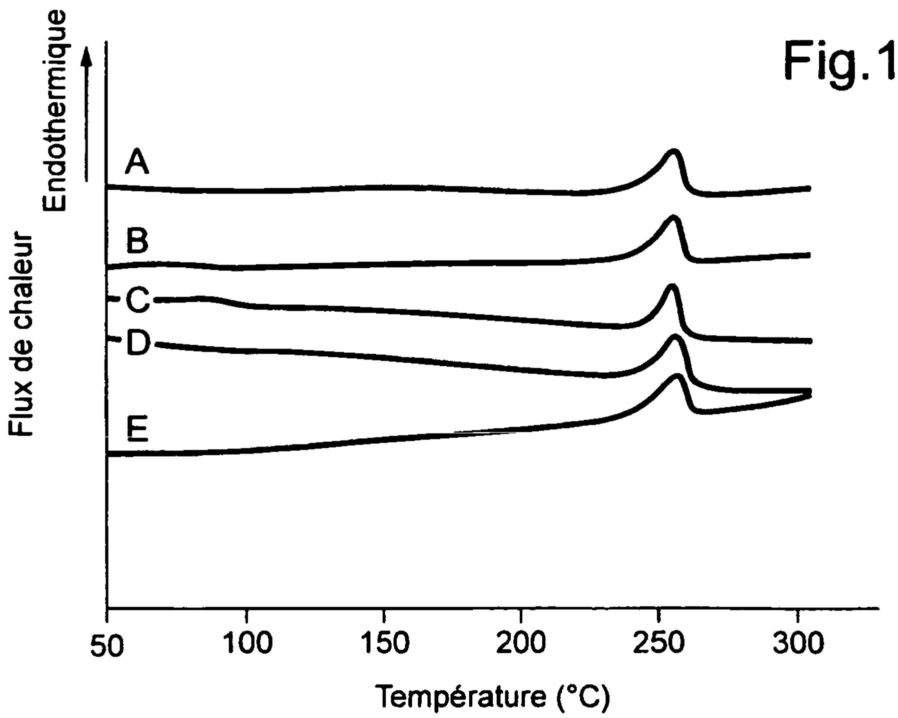
Endothermique
Flux de chaleur
A
B
C
D
E
50
100
150
200
250
300
Température (°C)

Fig.16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4818575 A
- US 4820795 A
- FR 2872082, Sidel
- WO 2006008380 A